(19) Europäisches Patentamt / European Patent Office / Office européen des brevets

(11) **EP 2 631 163 B1**

(12) **FASCICULE DE BREVET EUROPEEN**

(45) Date de publication et mention
de la délivrance du brevet:
**05.11.2014   Bulletin 2014/45**

(51) Int Cl.:
**B62K 23/04** *(2006.01)*     **B62M 25/04** *(2006.01)*

(21) Numéro de dépôt: **13155218.4**

(22) Date de dépôt: **14.02.2013**

(54) **Manette de changement de vitesse pour bicyclette comprenant un réducteur de déplacement**

Gangschaltungshebel für Fahrrad, der eine Bewegungsuntersetzung umfasst

Gearshift lever for bicycle including a displacement restrictor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **27.02.2012   FR 1251764**

(43) Date de publication de la demande:
**28.08.2013   Bulletin 2013/35**

(73) Titulaire: **DECATHLON
59650 Villeneuve d'Ascq (FR)**

(72) Inventeurs:
• **He, Yue
  59000 Lille (FR)**
• **Lemaitre, Benoit
  59000 Lille
   (FR)**

(74) Mandataire: **Balesta, Pierre
  Cabinet Beau de Loménie
  Immeuble Eurocentre
  179 Boulevard de Turin
  59777 Lille (FR)**

(56) Documents cités:
EP-A1- 0 636 539      EP-A1- 1 238 899
EP-A1- 1 935 770      EP-A2- 1 127 782
US-A1- 2003 140 725

**EP 2 631 163 B1**

**Description**

DOMAINE DE L'INVENTION

L'invention concerne une manette de changement de vitesse pour bicyclette ou équivalent, et plus particulièrement une manette de changement de vitesse configurée pour être montée coaxialement à une poignée d'un guidon de bicyclette ou équivalent. EP-A-1 238 899 décrit une manette de changement de vitesse selon le préambule de la revendication 1.

ETAT DE LA TECHNIQUE ANTERIEURE

On connait une manette de changement de vitesse pour bicyclette ou équivalent, présentant un jour s'étendant selon un axe principal, configurée pour être montée de manière coaxiale sur une poignée de guidon de bicyclette ou équivalent et comprenant un élément fixe configuré pour être rendu solidaire de la poignée de guidon, une poignée rotative coaxiale à l'axe principal et mobile en rotation autour de l'axe principal, un élément d'entrainement mobile en rotation autour de l'axe principal et configuré pour entrainer l'extrémité d'un câble de commande d'un dérailleur, et des moyens de couplage configurés pour coupler en rotation la poignée rotative et l'élément d'entrainement de sorte que la course angulaire de l'élément d'entrainement est inférieure à la course angulaire de la poignée rotative.

Ce type de manette n'est pas adapté aux enfants et jeunes adolescents. En effet, les manettes de changement de vitesse pour enfant doivent présenter un encombrement réduit de manière à être adaptées à la taille de leurs mains et à laisser suffisamment d'espace libre sur la poignée du guidon tout en présentant un rapport de transmission entre la poignée rotative et l'élément d'entrainement suffisamment élevé pour que l'effort de manipulation ne soit pas trop important. En effet, l'élément d'entrainement étant relié à un câble, en général un câble Bowden®, la manipulation de la manette demande de fournir un effort au moins supérieur aux efforts de rappel générés par le ou les ressorts de rappel du dérailleur.

Ainsi, dans le type de manette précité soit l'encombrement est adapté à la taille de la main d'un enfant, mais le rapport de transmission entre la poignée rotative et l'élément d'entrainement est trop faible de sorte l'effort de manipulation est trop important pour un enfant, soit le rapport de transmission est adapté à la force d'un enfant mais l'encombrement est trop important ce qui rend la manette inadaptée à la main d'un enfant.

PRESENTATION DE L'INVENTION

Le but de la présente invention est de remédier au moins substantiellement aux inconvénients mentionnés ci-avant.

L'invention atteint son but en proposant une manette de changement de vitesse du type précité dans laquelle les moyens de couplage comprennent une première roue dentée coaxiale à l'axe principal et couplée en rotation avec la poignée rotative, une deuxième roue dentée coaxiale à l'axe principal et couplée en rotation avec l'élément d'entrainement, et un élément intermédiaire présentant un axe de rotation parallèle à, et distinct de, l'axe principal et couplant en rotation la première roue dentée et la deuxième roue dentée.

On comprend que le terme « bicyclette ou équivalent » vise bien entendu les bicyclettes et les tricycles, mais également tout type de cycle. Dans la suite, le terme « poignée » peut être utilisé pour « poignée rotative ». De même les termes « première roue » et « deuxième roue » peuvent être respectivement utilisés pour « première roue dentée » et « deuxième roue dentée ». On pourra également utiliser le terme « manette » pour « manette de changement de vitesse ».

On comprend que la poignée du guidon de la bicyclette ou du cycle est emmanchée dans le jour de la manette de changement de vitesse. Ainsi, l'élément fixe, la poignée rotative, la première roue et la deuxième roue sont configurés pour être disposés coaxialement autour de la poignée du guidon.

La première roue dentée est entrainée en rotation par la poignée. La poignée peut entrainer la première roue, seulement dans un sens de rotation, ou bien dans les deux sens de rotation. Dans un mode de réalisation, la poignée est solidaire, directement ou indirectement (par exemple, par le biais d'une ou plusieurs pièces intermédiaires ou d'un embrayage) de la première roue de sorte qu'un mouvement angulaire de la poignée entraine un même mouvement angulaire de la première roue et/ou qu'un mouvement angulaire de la première roue entraine un même mouvement angulaire de la poignée.

L'élément d'entrainement est entrainé en rotation par la deuxième roue dentée. Selon un mode de réalisation, l'élément d'entrainement est solidaire, directement ou indirectement (par exemple, par le biais d'une ou plusieurs pièces intermédiaires ou d'un embrayage), de la deuxième roue de sorte qu'un mouvement angulaire de la deuxième roue entraine un même mouvement angulaire de l'élément d'entrainement et/ou qu'un mouvement angulaire de l'élément d'entrainement entraine un même mouvement angulaire de la deuxième roue.

L'axe de révolution de la poignée rotative, de la première roue dentée, de la deuxième roue dentée et de l'élément d'entrainement est sensiblement confondu avec l'axe principal.

On comprend que l'élément intermédiaire forme un arbre intermédiaire et engrène d'une part la première roue dentée et d'autre part la deuxième roue dentée. L'élément intermédiaire, est disposé parallèlement à l'axe principal, mais n'est pas coaxial à ce dernier. Ainsi, lorsque la manette de changement de vitesse est montée sur un guidon, l'élément intermédiaire s'étend parallèlement à la poignée du guidon.

La première roue dentée, l'élément d'entrainement et la deuxième roue dentée font partie des moyens de couplage. De tels moyens de couplage permettent de fabriquer une manette présentant des dimensions adaptées aux mains des enfants (par exemple d'un diamètre inférieur ou égal à 35 mm et d'un encombrement axial inférieur ou égal à 50 mm) et un rapport de transmission entre la poignée et l'élément d'entrainement élevé, par exemple au moins égal à 2 (deux). Par ailleurs, ces moyens de couplage présentent une structure compacte, ce qui autorise l'utilisation de roue(s) de suffisamment grand diamètre pour d'une part obtenir un rapport de transmission entre la poignée et l'élément d'entrainement élevé, et d'autre part fabriquer une manette d'encombrement adapté à la main des enfants. Par la suite, on comprend que l'intérêt de réduire l'encombrement (ou de la compacité) d'une pièce ou d'une partie de la manette est tant de pouvoir mieux adapter la manette aux mains des enfants que de permettre l'utilisation de roue(s) de diamètre adapté pour que le rapport de transmission entre la poignée et l'élément d'entrainement soit élevé.

Pour rappel un rapport de transmission X entre une roue A et une roue B signifie que la roue A tourne X fois plus, ou X fois plus vite, que la roue B. En réduisant la vitesse de rotation de la roue B par rapport à la vitesse de rotation de la roue A, le diamètre des roues A et B étant inchangé par ailleurs, on réduit d'autant l'effort (ou couple) à fournir au niveau de la roue A pour générer un effort identique au niveau de la roue B. On comprend donc qu'avec un rapport de transmission au moins égal à 2, la course angulaire de la poignée est au moins deux fois plus importante que la course angulaire de l'élément d'entrainement tandis que l'effort généré au niveau de l'élément d'entrainement est au moins deux fois plus important que l'effort appliqué au niveau de la poignée pour l'entrainer en rotation. Un rapport de transmission au moins égal à 2 est particulièrement adapté pour une manette pour enfants.

Ainsi, on comprend que les moyens de couplage comprenant la première roue dentée, l'élément d'entrainement et la deuxième roue dentée selon l'invention présentent un encombrement réduit radialement (par rapport à l'axe principal) et axialement (i.e. parallèlement à l'axe principal) tout en permettant un rapport de transmission entre la poignée et l'élément d'entrainement élevé, ce qui rend la manette de changement de vitesse selon l'invention particulièrement adaptée aux enfants.

Avantageusement, l'élément intermédiaire présente une troisième roue dentée engrenant directement la première roue dentée, et une quatrième roue dentée solidaire de la troisième roue dentée, ladite quatrième roue dentée engrenant directement la deuxième roue dentée.

Préférentiellement, l'élément intermédiaire se présente sous la forme d'un arbre intermédiaire présentant la troisième roue dentée et la quatrième roue dentée. La troisième roue dentée est solidaire de la quatrième roue dentée de sorte que lorsque la troisième roue tourne la quatrième roue tourne également d'un même mouvement angulaire, et vice versa.

Avantageusement, le rayon de la première roue dentée est supérieur au rayon de la troisième roue dentée, le rayon de la troisième roue dentée est supérieur au rayon de la quatrième roue dentée, le rayon de la quatrième roue dentée est inférieur au rayon de la deuxième roue dentée, et le rayon de la première roue dentée est inférieur au rayon de la deuxième roue dentée.

En prenant une telle relation d'ordre entre les rayons des roues, on s'assure que la première roue tourne plus vite que la deuxième roue. On peut ainsi obtenir une manette dans laquelle le rapport de transmission entre la première roue et la deuxième roue est élevé tout en assurant la compacité des moyens de couplage. En particulier, le rayon de la quatrième roue étant inférieur au rayon de la troisième roue assure que la deuxième roue sera entrainée moins vite que ce que la première roue entraine la troisième roue, tandis que les relations d'ordres entre les autres rayons permettent d'optimiser le rapport de transmission entre la première roue et la deuxième roue et de réduire l'encombrement de la manette.

Avantageusement, le rayon de la poignée rotative est supérieur au rayon de la première roue.

Une telle relation d'ordre permet de former un bras de levier entre la poignée et la première roue dentée réduisant encore l'effort à fournir par l'utilisateur pour manipuler la poignée et piloter le dérailleur.

Avantageusement, le rayon de l'élément d'entrainement est inférieur au rayon de la deuxième roue.

Une telle relation d'ordre permet de former un bras de levier entre la deuxième roue et l'élément d'entrainement réduisant encore l'effort à fournir par l'utilisateur pour manipuler la poignée et piloter le dérailleur.

Avantageusement, le rapport de transmission entre la première roue dentée et la deuxième roue dentée est compris entre 2 et 4.

On comprend donc que la première roue dentée tourne 2 (deux) à 4 (quatre) fois plus vite que la deuxième roue dentée. Ainsi, le couple de la deuxième roue dentée est 2 à 4 fois plus élevé que le couple appliqué à la première roue dentée pour l'entrainer en rotation.

Avantageusement, la deuxième roue dentée présente des dents de couplage avec l'élément intermédiaire sur uniquement un premier secteur angulaire, tandis que l'élément d'entrainement est disposé sur uniquement un deuxième secteur angulaire de ladite deuxième roue dentée distinct du premier secteur angulaire.

On comprend que dans cette variante l'élément d'entrainement fait partie de la deuxième roue. En configurant ainsi la deuxième roue, on limite l'encombrement de l'ensemble comprenant la deuxième roue dentée et l'élément d'entrainement. On limite ainsi l'encombrement de la manette, afin d'encore mieux l'adapter aux mains d'enfants et de pouvoir encore mieux optimiser le rapport de transmission entre la poignée et l'élément d'entrainement.

Avantageusement, le jour est cylindrique et formé dans un manchon cylindrique, la poignée rotative, l'élément d'entrainement, la première roue dentée et la deuxième roue dentée étant montés en rotation autour dudit manchon cylindrique.

Un tel manchon cylindrique permet de minimiser l'encombrement radial de la manette, d'une part en épousant au plus près la forme tubulaire de la plupart des poignées de guidon, et d'autre part en servant directement de palier pour la poignée rotative, l'élément d'entrainement, la première roue dentée et la deuxième roue dentée. Ainsi, le ratio des dimensions des roues dentées peut être encore optimisé pour augmenter le rapport de transmission et donc réduire l'effort à fournir par l'utilisateur pour manipuler la manette, tout en maintenant un encombrement réduit de la manette.

Avantageusement, la deuxième roue dentée est logée dans un carter, ledit carter comprenant deux demi-carters, un des demi-carters étant solidaire du manchon cylindrique.

En rendant un demi-carter solidaire du manchon, on réduit encore l'encombrement de la manette.

Avantageusement, les deux demi-carters forment respectivement un demi-carter extérieur et un demi-carter intermédiaire, la première roue dentée étant logée dans un espace ménagé entre la poignée rotative, le demi-carter intermédiaire et le manchon.

En logeant ainsi la deuxième roue dentée dans deux demi-carters, on optimise l'encombrement axial de la manette.

Avantageusement, la première roue dentée est logée axialement entre la poignée rotative et le demi-carter intermédiaire et radialement entre le manchon cylindrique et la poignée rotative.

Cet agencement est particulièrement compact, et permet de réduire l'encombrement de la manette tout en assurant un rapport de transmission entre la poignée et l'élément d'entrainement élevé. Par ailleurs un tel agencement assure que le rayon de la poignée est supérieur au rayon de la première roue.

Avantageusement, les deux demi-carters forment respectivement un demi-carter extérieur et un demi-carter intermédiaire, le demi-carter extérieur présentant un arbre, l'élément intermédiaire étant monté en rotation autour dudit arbre, le demi-carter intermédiaire comprenant une paroi s'étendant selon une direction radiale, et l'élément intermédiaire traversant ladite paroi.

De tels demi-carters permettent un encombrement réduit tant radialement qu'axialement de la manette.

Bien entendu on comprend que selon une variante, le carter ne comprend pas deux demi-carters mais est comprend une seule pièce (ou pièce principale de carter) ou de plus de deux pièces.

Avantageusement, la poignée rotative coopère avec le manchon par clipsage selon l'axe principal.

Un tel clipsage permet un maintien et un verrouillage axial de la poignée rotative peu encombrant, facile à fabriquer et réduisant le nombre de pièces nécessaires à la fabrication de la manette.

Avantageusement, l'élément fixe comprend une bague emmanchée autour du manchon cylindrique, la poignée rotative étant au moins partiellement emmanchée autour de la bague.

On comprend que la poignée recouvre au moins en partie la bague selon la direction axiale. Préférentiellement, la poignée est emmanchée autour de la bague et recouvre totalement la bague selon la direction axiale. Un tel élément fixe présente en encombrement réduit et est facile à assembler à la poignée du guidon.

Avantageusement, la manette comprend un carter, une fenêtre étant ménagée dans ledit carter, l'élément d'entrainement présentant un curseur visible à travers la fenêtre, la position du curseur relativement à la fenêtre formant un index d'indication de vitesse.

Avantageusement, la manette comprend des moyens de positionnement séquentiel interposés entre la poignée rotative et l'élément d'entrainement, configurés de telle sorte que la poignée rotative retourne dans une position neutre après avoir été déplacée dans un premier sens de rotation, ou dans un second sens de rotation opposé au premier sens de rotation tandis que l'élément d'entrainement reste à la position à laquelle il a été déplacé grâce audit déplacement de la poignée rotative.

On comprend que les moyens de positionnement séquentiel sont disposés entre la poignée rotative et l'élément d'entrainement dans la chaine de transmission du mouvement entre ces deux éléments, et coopèrent avec un ou plusieurs éléments de cette chaine de transmission, par exemple la première roue, la deuxième roue, l'élément intermédiaire, la poignée rotative elle-même ou encore l'élément d'entrainement lui-même. Avantageusement, ces moyens de positionnement séquentiel coopèrent avec la poignée rotative et avec les moyens de couplage.

Ces moyens de positionnement séquentiel permettent de changer de vitesse, en réalisant toujours le même mouvement pour augmenter, respectivement pour diminuer, le rapport des vitesses. Lorsque l'utilisateur veut passer successivement plusieurs rapports, dans le sens de l'augmentation ou de la diminution, les moyens de positionnement séquentiel permettent d'éviter une trop grande course rotative de la poignée en ramenant toujours la poignée à une position neutre entre deux passages de vitesse. Ainsi, on augmente la facilité d'utilisation de la manette, en évitant une trop grande course angulaire et/ou de rotation (i.e. course azimutale) de la poignée pour passer d'une vitesse T à une vitesse T+1 ou à une vitesse T-1, ce qui la rend particulièrement adaptée aux enfants.

BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :

- la figure 1 représente une bicyclette équipée d'une manette de changement de vitesse selon l'invention,
- la figure 2 représente la manette de changement de vitesse de la figure 1,
- la figure 3A représente une vue éclatée de la manette de la figure 2 en perspective,
- la figure 3B représente une vue éclatée de la manette de la figure 2, selon une autre perspective que celle de la figure 3A,
- la figure 4 représente une vue partiellement éclatée de la manette de la figure 2,
- la figure 5A représente les moyens de couplage de la manette de la figure 2, en perspective,
- la figure 5B représente les moyens de couplage de la figure 5A après rotation de la première roue,
- la figure 5C représente les positions et les directions de rotation de commande la poignée rotative et les positions et les directions de rotation d'entrainement de l'élément d'entrainement,
- la figure 6 représente une vue des moyens de couplage selon la flèche IX de la figure 4,
- la figure 7 représente une vue en coupe axiale de manette de la figure 2,
- la figure 8A représente la position relative des premières cames par rapport aux premiers cliquets lorsque la poignée est entrainée depuis la position neutre vers la première position, vue selon la flèche VIII de la figure 4
- les figures 8B à 8D représentent des vues successives de la première roue et les premiers cliquets en coupe vue selon la flèche VIII de la figure 4 lorsque la poignée est entrainée depuis la position neutre (cf. fig. 8B), vers la première position (cf. fig.8C), puis retourne dans la position neutre (cf. fig. 8D),
- la figure 9A représente la position relative des deuxième et troisième cames par rapport aux deuxième et troisième cliquets lorsque la poignée est entrainée depuis la position neutre vers la première position, vue selon la flèche IX de la figure 4,
- les figures 9B à 9D représentent des vues successives de la deuxième roue et du deuxième et troisième cliquet en coupe vue selon la flèche IX de la figure 4 lorsque la poignée est entrainée depuis la position neutre (cf. fig. 9B), vers la première position (cf. fig.9C), puis retourne dans la position neutre (cf. fig. 9D),
- la figure 10A représente la position relative des premières cames par rapport aux premiers cliquets lorsque la poignée est entrainée depuis la position neutre vers la seconde position, vue selon la flèche VIII de la figure 4,
- les figures 10B à 10F représentent des vues successives de la première roue et les premiers cliquets en coupe vue selon la flèche VIII de la figure 4 lorsque la poignée est entrainée depuis la position neutre (cf. fig. 10B) vers la seconde position (cf. fig.10D) en passant par une position intermédiaire (cf. fig. 10C), puis retourne dans la position neutre (cf. fig. 10F) en passant par la même position intermédiaire (cf. fig.10E),
- la figure 11A représente la position relative des deuxième et troisième cames par rapport aux deuxième et troisième cliquets lorsque la poignée est entrainée depuis la position neutre vers la seconde position, vue selon la flèche IX de la figure 4, et
- les figures 11B à 11F représentent des vues successives de la deuxième roue et du deuxième et troisième cliquet en coupe vue selon la flèche IX de la figure 4 lorsque la poignée est entrainée depuis la position neutre (cf. fig. 11B) vers la seconde position (cf. fig.11D) en passant par une position intermédiaire (cf. fig. 11C), puis retourne dans la position neutre (cf. fig. 11F) en passant par la même position intermédiaire (cf. fig.11E).

## DESCRIPTION DETAILLEE D'EXEMPLES DE REALISATION

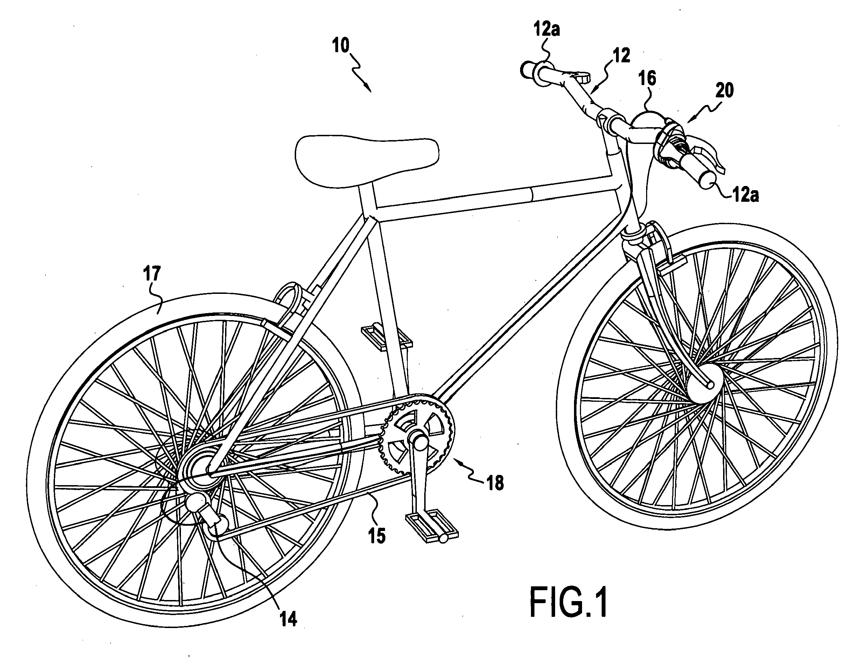

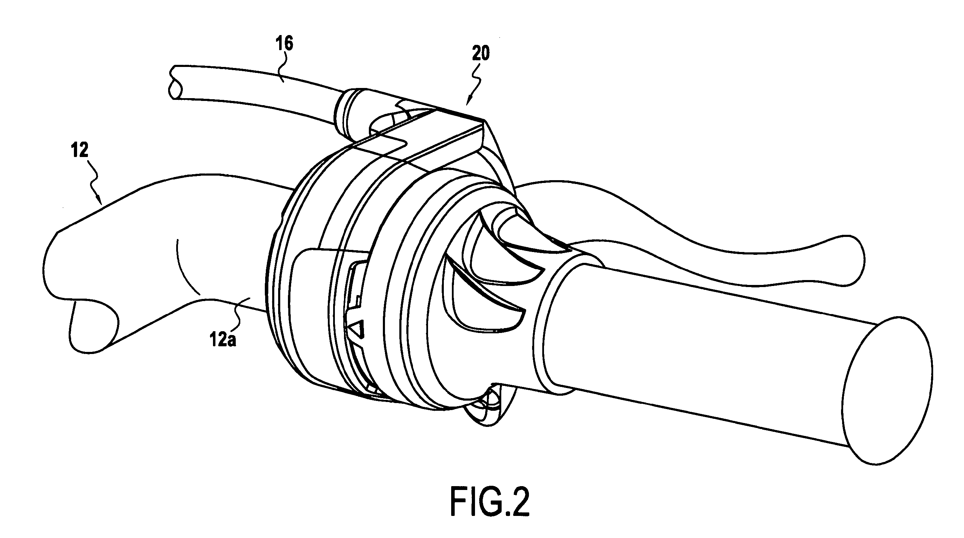

La figure 1 représente une bicyclette 10 comprenant une manette de changement de vitesse 20 selon l'invention montée coaxialement à une poignée 12a du guidon 12. La manette de dérailleur 20 est reliée à un dérailleur 14 par l'intermédiaire d'un câble Bowden® 16. Dans cet exemple, le dérailleur 14 est un dérailleur arrière (i.e. pour faire passer la chaine 15 d'un pignon à l'autre sur la roue arrière), mais bien entendu, la manette 20 peut être reliée à un dérailleur avant (i.e. pour faire passer la chaine 15 d'un plateau à l'autre sur le pédalier 18, un seul plateau étant représenté sur la figure 1). Bien entendu, une manette selon l'invention peut être disposée sur chacune des deux poignées 12a du guidon 12, une manette étant reliée à un dérailleur arrière, l'autre manette étant reliée à un dérailleur avant non représenté. La figure 2 représente la manette 20 de la figure 1 sur la poignée de guidon 12a.

## DESCRIPTION STRUCTURALE DE LA MANETTE

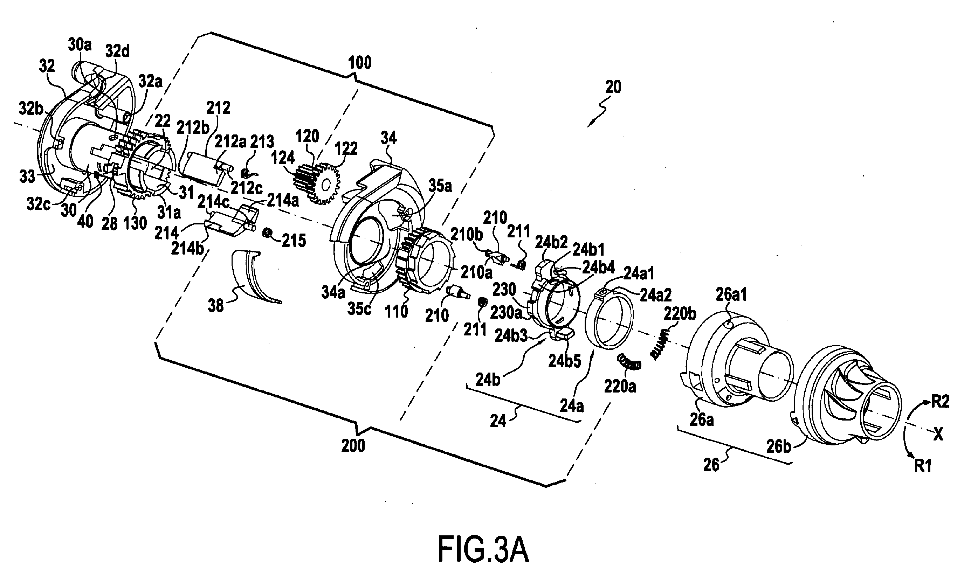

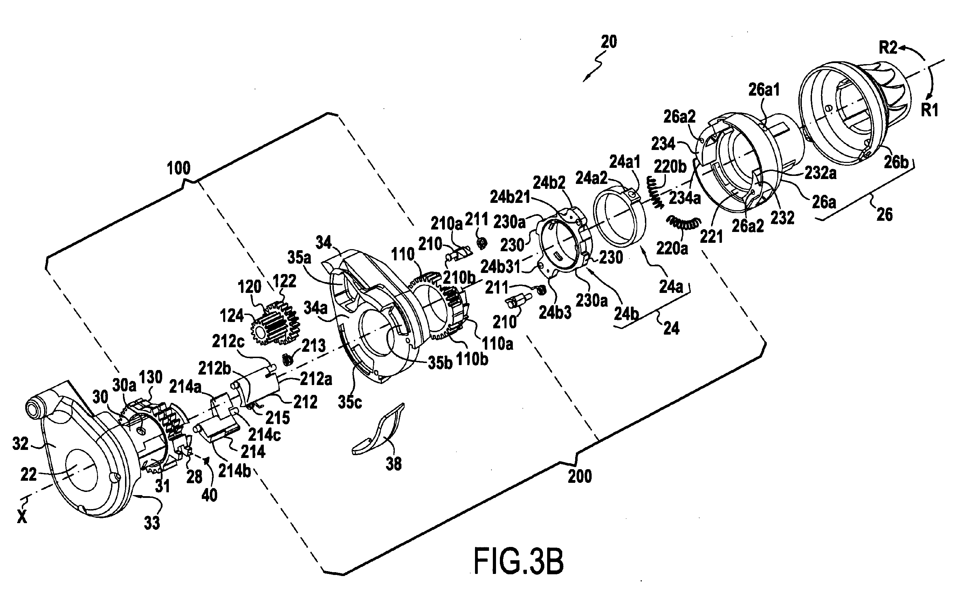

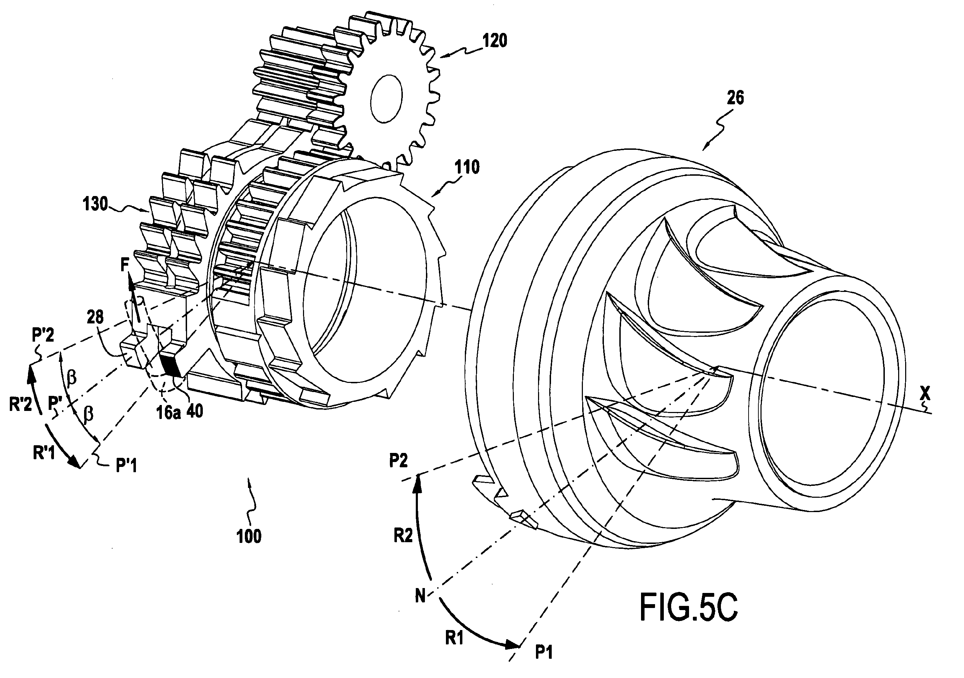

Les figures 3A et 3B représentent la manette 20 vue en éclaté en perspective. La manette 20 présente un jour cylindrique 22 s'étendant selon l'axe principal X et comprend un élément fixe 24 permettant de fixer la manette 20 à la poignée de guidon 12a, une poignée rotative 26 coaxiale à l'axe principal X et mobile en rotation autour de l'axe principal X, un élément d'entrainement 28 mobile en rotation autour de l'axe principal X auquel est accroché une extrémité 16a du câble 16 (cf. fig. 5C), des moyens de couplage 100 couplant en rotation la poignée rotative 26 et l'élément d'entrainement 28, et des moyens de positionnement séquentiel 200 coopérant avec les moyens de couplage 100 et la poignée rotative 26.

Le jour cylindrique 22 est formé dans un manchon cylindrique 30. L'axe principal X du jour 22 est confondu avec l'axe du manchon 30. Le manchon 30 est solidaire du demi-carter extérieur 32. Le manchon 30 présente des languettes 31 s'étendant axialement (i.e. parallèlement à l'axe principal X), l'extrémité distale des languettes 31 présentant un relief 31a. La poignée 26, et plus particulièrement l'élément de poignée 26a, est emmanchée autour du manchon 30, et coopère par clipsage avec les languettes 31 et les reliefs 31a selon la direction axiale X.

Dans cet exemple, la poignée rotative 26 comprend un élément de poignée 26a et un habillage de poignée (ou en anglais « grip ») 26b. Bien entendu, selon une variante, la poignée rotative ne comprend qu'un élément de poignée.

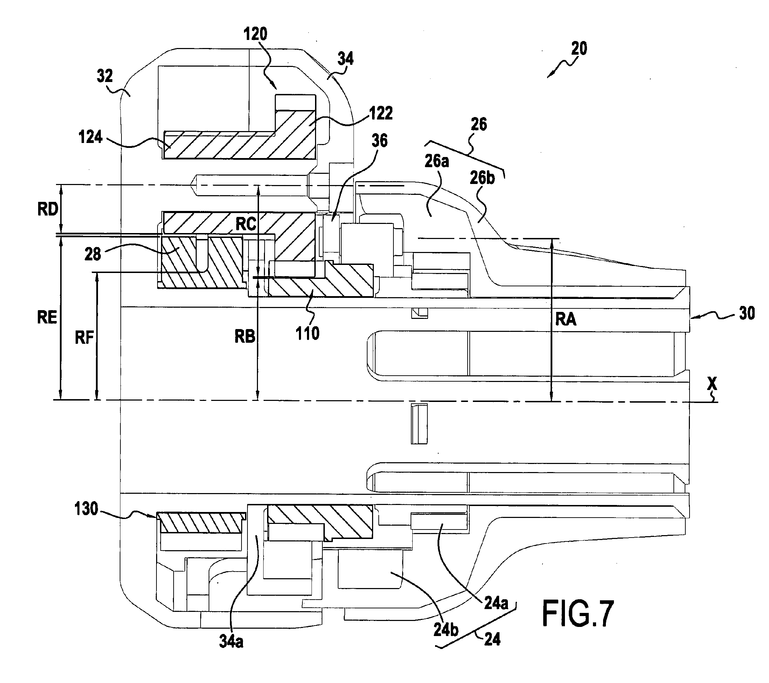

L'élément fixe 24 comprend une première bague 24a et une deuxième bague 24b. Ces première et deuxième bagues 24a et 24b sont emmanchées autour du manchon 30 tandis que la poignée 26 est emmanchée sur le manchon 30 autour des bagues 24a et 24b, comme cela est visible sur la figure 7. La première bague 24a est en métal, préférentiellement en aluminium. La première bague 24a est emmanchée autour de la deuxième bague 24b. La première bague 24a présente un trou taraudé 24a1 recevant une vis de fixation non représentée qui coopère avec la poignée 12a du guidon 12 pour fixer la manette 20 au guidon 12. Ce trou taraudé 24a1 est formé radialement dans une saillie radiale 24a2 de la première bague 24a. On comprend que la direction radiale est une direction perpendiculaire à l'axe principal X, ou direction axiale X. La deuxième bague 24b présente un trou 24b1, l'élément de poignée 26a présente un trou 26a1 et le manchon 30 présente un trou 30a, ces trous étant destinés à recevoir la vis. Le trou 26a1 permet également de recevoir l'extrémité d'un tournevis pour visser/dévisser la vis afin de fixer/retirer la manette 20 du guidon 12.

Les trous de fixation 26a1, 24a1, 24b1 et 30a sont ménagés sensiblement au milieu de la manette 20 selon la direction axiale. Ceci permet de réduire l'encombrement axial de la manette 20 et/ou de libérer de la place pour le mécanisme de la manette 20, notamment pour les moyens de couplage 100 et les moyens de positionnement séquentiel 200.

La deuxième bague 24b présente une première saillie radiale 24b2 et une deuxième saillie radiale 24b3 diamétralement opposées, pour monter un deuxième cliquet 212 (sur la première saillie 24b2) et un troisième cliquet 214 (sur la deuxième saillie 24b3) décrits ultérieurement sur l'élément fixe 24. La première saillie 24b2 présente deux ergots axiaux 24b4 qui coopèrent chacun azimutalement avec la saillie radiale 24a2 de la première bague 24a afin de bloquer les mouvements de rotation d'une bague par rapport à l'autre. La deuxième saillie 24b3 présente une saillie axiale 24b5 dont la fonction sera décrite ultérieurement. En outre la deuxième bague 24b présente deux premières cames 230 diamétralement opposées, chacune coopérant avec un premier cliquet 210 décrit ultérieurement. Les saillies 24b2 et 24b3 sont respectivement décalées d'environ 90° (quatre-vingt-dix degrés d'angle) par rapport aux premières cames 230.

D'une manière générale, on comprend que des éléments disposés diamétralement opposés peuvent selon des variantes être diamétralement opposés à plus ou moins 20° (vingt degrés d'angle).

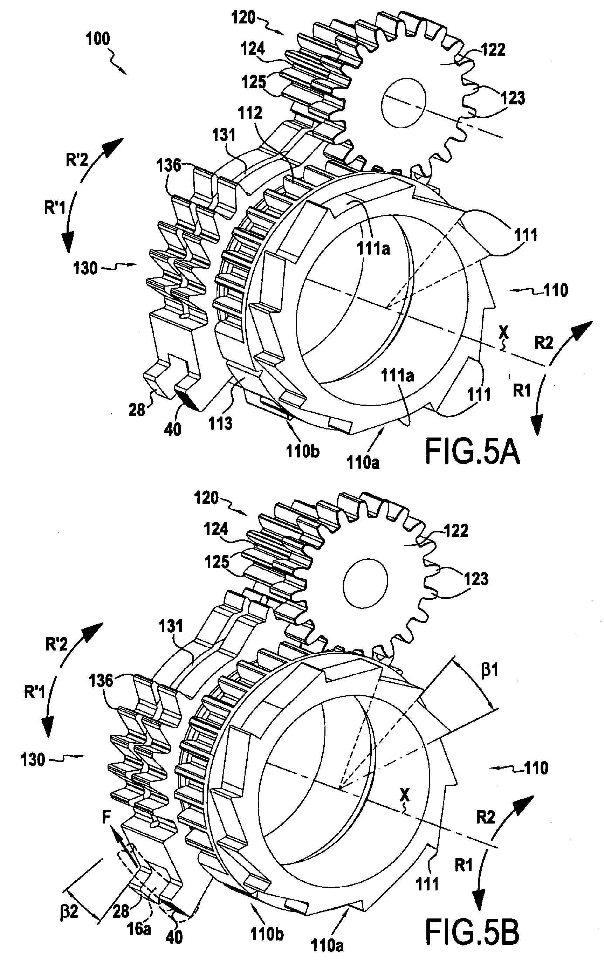

Les moyens de couplage 100 comprennent une première roue dentée 110, un élément intermédiaire 120, et une deuxième roue dentée 130. La première roue 110 et la deuxième roue 130 sont emmanchées et coopèrent en rotation autour du manchon 30, et sont coaxiales à l'axe X. L'élément d'entrainement 120 est monté en rotation sur l'arbre 32a du demi-carter extérieur 32. La figure 5A représente les moyens de couplage 100 avec la première roue 110 et la deuxième roue 130 engrenées avec l'élément intermédiaire 120.

La première roue 110 comprend une première portion annulaire 110a et une seconde portion annulaire 110b adjacente selon la direction axiale X à la première portion annulaire 110a.

La première portion annulaire 110a présente à sa périphérie des premières dents 111. Les premières dents 111 sont réparties en deux séries sur la périphérie de la portion annulaire 110, chaque série coopérant avec un premier cliquet 110 et étant séparée l'une de l'autre par un espacement angulaire 111a dépourvu de dents.

Les premières dents 111 coopèrent avec les deux premiers cliquets 210 solidaires de la poignée 26, et plus particulièrement solidaires de l'élément de poignée 26a. Ces premiers cliquets 210 permettent de coupler en rotation la poignée 26 avec la première roue 110 dans un premier sens de rotation R1. On comprend que la première roue 110 et la poignée 26 ne sont pas couplées en rotation dans le second sens de rotation R2 opposé au premier sens de rotation R1.

La seconde portion annulaire 110b présente à sa périphérie des quatrièmes dents 112. Ces quatrièmes dents 112 sont uniformément réparties sur une majeure partie continue de la périphérie (environ 90%) de la seconde portion annulaire 110b. La partie restante 113 de la périphérie de la portion annulaire 110b ne présente pas de dent et forme une butée en rotation, l'élément intermédiaire 120 ne pouvant pas engrener cette partie restante 113.

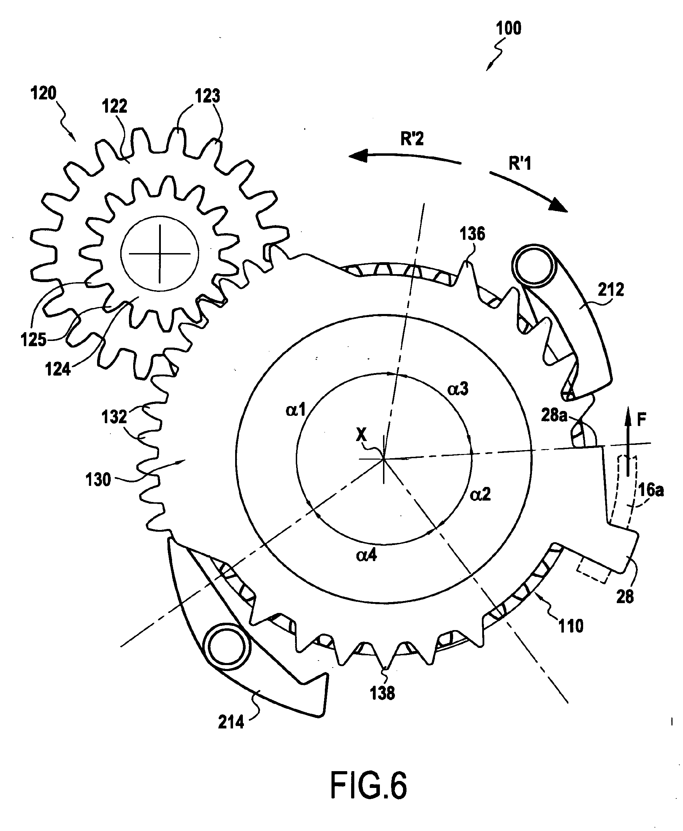

L'élément intermédiaire 120 présente une troisième roue dentée 122 engrenant directement la première roue 110, et une quatrième roue 124 engrenant directement la deuxième roue 130. La troisième roue 122 et la quatrième roue 124 sont solidaires. Ainsi l'élément intermédiaire 120 forme un arbre intermédiaire sur lequel sont formées côte à côte la troisième et la quatrième roue 122 et 124. La troisième roue 122 présente des sixièmes dents 123 engrenant les quatrièmes dents 112 de la première roue 110, et plus particulièrement de la seconde portion annulaire 110b. La quatrième roue 124 présente des septièmes dents 125 engrenant des cinquièmes dents 132 de la deuxième roue 130 (cf. fig. 6).

Bien entendu, on comprend que les premières, deuxièmes, troisièmes, quatrièmes, cinquièmes, sixièmes et septièmes dents 111, 136, 138, 112, 132, 123 et 125 sont toutes distinctes les unes des autres.

La deuxième roue dentée 130 présente quatre secteurs angulaires distincts α1, α2, α3 et α4 et adjacents deux-à-deux, visibles sur la figure 6. Sur la figure 6, considérés selon le sens trigonométrique (i.e. selon le sens R'2), les secteurs angulaires sont disposés successivement dans l'ordre suivant : α1, α4, α2 et α3. Les cinquièmes dents 132 engrenant les septièmes dents 125 de la quatrième roue dentées 124 sont disposées à la périphérie de la deuxième roue 130 sur uniquement le premier secteur angulaire α1.

L'élément d'entrainement 28 est disposé sur la périphérie de la deuxième roue 130 sur uniquement le deuxième secteur angulaire α2. On comprend donc que la deuxième roue 130 et l'élément d'entrainement 28 forment une seule et même pièce. L'élément d'entrainement 28 forme une fourche en saillie radiale depuis la périphérie de la deuxième roue 130, fourche sur laquelle est arrimée l'extrémité 16a du câble de dérailleur. L'élément d'entrainement 28 est ainsi couplé en rotation avec la deuxième roue 130 en étant solidaire de cette dernière. Ainsi, l'élément d'entrainement 28 est monté en rotation autour du manchon 30 via la deuxième roue 130. Comme représenté sur la figure 5A, la deuxième roue 130 présente à sa périphérie une rainure azimutale 131 prévue pour recevoir le câble du dérailleur lors des mouvements rotatifs de la deuxième roue 130. Cette rainure 131 s'étend sur un secteur angulaire limité s'étendant sur le troisième et le premier secteur angulaire α3 et α1 depuis l'élément d'entrainement 28, et sépare en deux (selon la direction axiale) les deuxièmes et quatrièmes dents 136 et 132.

Des deuxièmes dents 136 sont disposées sur la périphérie de la deuxième roue 130 sur uniquement le troisième secteur angulaire α3, tandis que des troisièmes dents 138 sont disposées sur la périphérie de la deuxième roue 130 sur uniquement le quatrième secteur angulaire α4. Ces deuxièmes et troisièmes dents 136 et 138 coopèrent respectivement avec un deuxième cliquet 212 et un troisième cliquet 214 décrits ultérieurement. On comprend que le deuxième cliquet 212 peut également coopérer en appui azimutal selon la direction de rotation R'2 avec l'extrémité azimutale 28a de l'élément d'entrainement 28, délimitant la séparation entre le deuxième secteur angulaire α2 et le troisième secteur angulaire α3.

Comme représenté sur la figure 7, le rayon RB de la première roue 110 est supérieur au rayon RC de la troisième roue 122, le rayon RC de la troisième roue 122 est supérieur au rayon RD de la quatrième roue 124, le rayon RD de la quatrième roue 124 est inférieur au rayon RE de la deuxième roue 130, et le rayon RB de la première roue 110 est inférieur au rayon RE de la deuxième roue 130. Par ailleurs, le rayon RA (i.e. rayon moyen selon la direction axiale X) de la poignée 26 est supérieur au rayon RB de la première roue 110. De plus le rayon RF auquel est disposé l'élément d'entrainement 28 (i.e. rayon de l'élément d'entrainement 28) sur la deuxième roue 130 est inférieur au rayon RE où les cinquièmes dents 132 sont disposées à la périphérie de la deuxième roue 130. Dans cet exemple, RA = 20.6mm (millimètre), RB = 15.5 mm, RC = 9.8mm, RD = 4.4mm, RE=20.9mm et RF=16.8mm. Grâce à cette configuration, les moyens de couplage 100 forment un réducteur de déplacement dans lequel la course angulaire de la deuxième roue 130 est inférieure à la course angulaire de la première roue 110. Ainsi, la course angulaire de l'élément d'entrainement 28 est inférieure à la course angulaire de la poignée rotative 26.

La deuxième roue 130 est logée dans un carter comprenant les deux demi-carters 32 et 34. Le demi-carter 32 forme un demi-carter extérieur tandis que le demi-carter 34 forme un demi-carter intermédiaire. La première roue 110 est logée dans un espace 36 (cf. figure 7) ménagé entre la poignée 26, et plus particulièrement l'élément de poignée 26a, le demi-carter intermédiaire 34 et le manchon 30. Plus précisément, la première roue 110 est logée axialement entre la poignée rotative 26, et plus particulièrement l'élément de poignée 26a, et le demi-carter intermédiaire 34, et plus particulièrement la paroi radiale 34a du demi-carter intermédiaire 34, et radialement entre le manchon cylindrique 30 et la poignée rotative 26, et plus particulièrement l'élément de poignée 26a. L'élément intermédiaire 120 traverse axialement la paroi radiale 34a par une ouverture 35a.

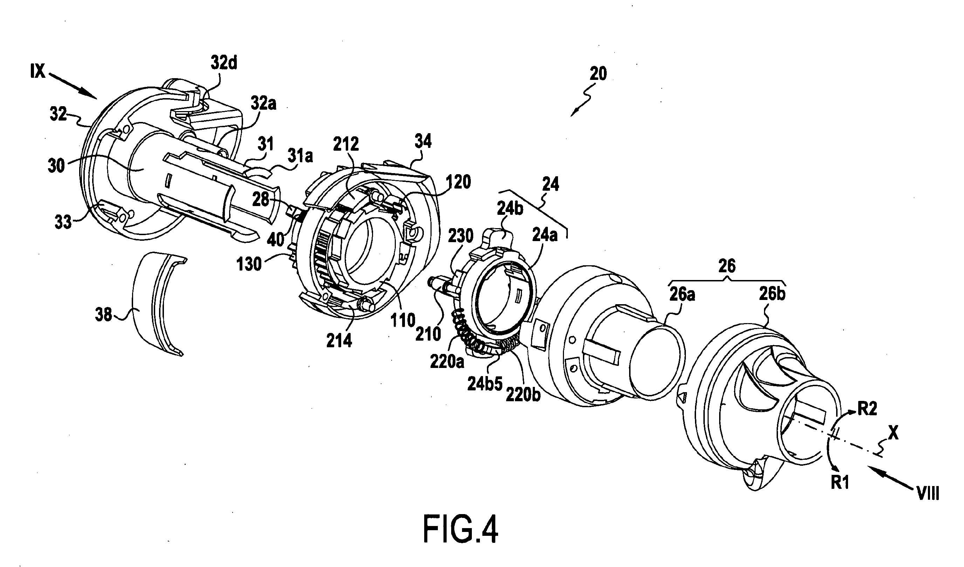

Comme représenté sur les figures 3A et 4, le demi-carter extérieur 32 présente une rainure 32d servant de guide au câble du dérailleur (non représenté), pour le guider vers l'élément d'entrainement 28.

Une fenêtre 33 est ménagée dans le carter, et plus particulièrement dans le demi-carter extérieur 32. Cette fenêtre est close par un élément transparent 38 (i.e. à travers lequel on peut voir à l'oeil nu). Un curseur 40 solidaire de l'élément d'entrainement 28 est visible à travers l'élément transparent 38 et indique la position de l'élément d'entrainement 28 relativement à la fenêtre 33, et forme ainsi un index d'indication de vitesse. Autrement dit, le curseur 40 indique sur quel pignon ou sur quel plateau le dérailleur positionne la chaine. Dans cet exemple, le curseur 40 est un autocollant, préférentiellement de couleur vive, collé sur l'élément d'entrainement 28.

Les moyens de positionnement séquentiel 200 comprennent les premiers cliquets 210, le deuxième cliquet 212 et le troisième cliquet 214. Les moyens de positionnement séquentiel 200 comprennent également les deux premières cames 230, une deuxième came 232 et une troisième came 234 solidaires de la poignée 26, et plus particulièrement de l'élément de poignée 26a. Dans cet exemple, les moyens de positionnement séquentiel 200 présentent deux premiers cliquets 210 et deux premières cames 230. Selon une variante, les moyens de positionnement séquentiel ne présentent qu'un seul premier cliquet et qu'une seule première came, ou plus de deux premiers cliquets et plus de deux premières cames. La première portion annulaire 110a présente alors une seule ou plus de deux séries de premières dents 111, chaque série de premières dents coopérant avec un premier cliquet 210. Les moyens de positionnement séquentiel 200 comprennent en outre deux ressorts de rappel 220a et 220b.

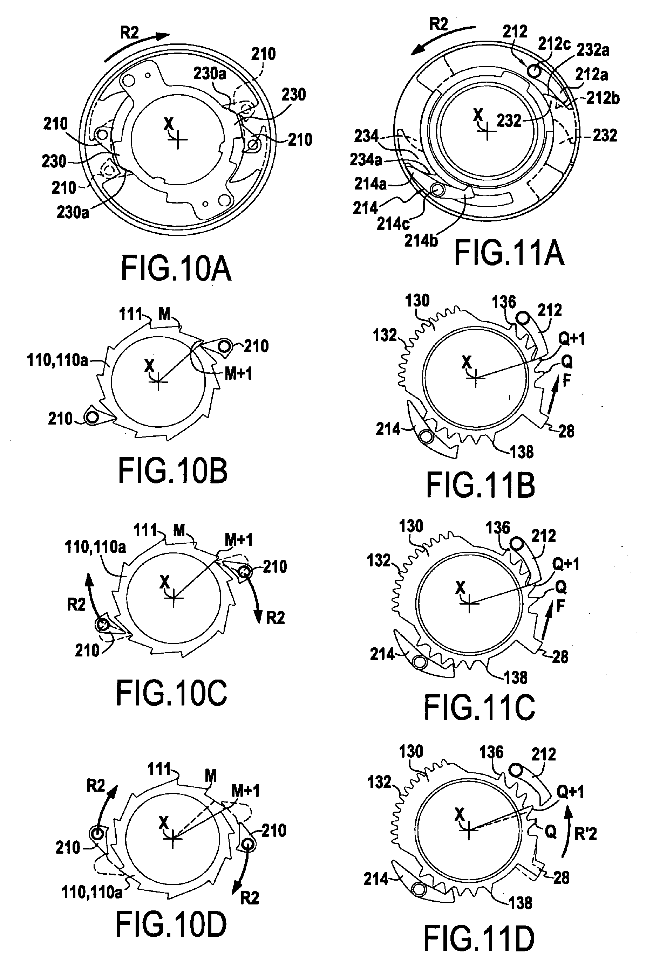

Les deux premiers cliquets 210 sont disposés diamétralement opposés par rapport à la première roue 110. Ces premiers cliquets 210 sont montés en rotation sur la poignée 26, et plus particulièrement de l'élément de poignée 26a. Comme représenté sur la figure 3B les trous 26a2 servent de palier pour les premiers cliquets 210. Des ressorts de torsion 211 coopèrent avec la poignée 26 et avec les premiers cliquets 210. Ces ressorts 211 maintiennent les premiers cliquets 210 engagés avec les premières dents 111. Chaque première came 230 coopère chacune avec un premier cliquet 210 et le désengage des premières dents 111 lorsque la poignée 26 tourne dans la deuxième direction R2. Plus particulièrement, chaque première came 230 présente une extrémité azimutale biseautée 230a qui coopère avec un premier cliquet 210 de manière à désengager ce premier cliquet 210 d'avec les premières dents 111. Pour ce faire, l'extrémité azimutale biseauté 230a s'engage sous le cliquet 210 de manière soulever son extrémité 210a coopérant avec les premières dents 111 et à le faire pivoter afin de contrer les efforts du ressort 211 et de le dégager d'avec les premières dents 111 (cf. fig. 10A et 10D). Dans cet exemple, les premiers cliquets 210 sont plus larges que la première roue 110 de manière à ce que les premières cames 230 coopèrent avec les premiers cliquets 210 sans interférer avec la première roue 110.

On comprend que les termes « dessous » et « dessus » sont relatifs à la direction radiale, le « dessous » étant le côté d'une pièce disposé radialement plus près de l'axe principal X que le « dessus », qui lui est donc le côté d'une pièce radialement le plus éloigné par rapport à l'axe principal X. De même, on comprend que le terme « soulever » signifie « écarter de l'axe principal X ».

Le deuxième cliquet 212 est monté en rotation sur l'élément fixe 24, et plus particulièrement sur la saillie 24b2. Le trou 24b21 forme un palier pour le deuxième cliquet 212. Par ailleurs, le trou 32b du demi-carter extérieur 32 forme un palier complémentaire pour le deuxième cliquet 212. Le ressort à torsion 213 coopère avec l'élément fixe 24 et avec le deuxième cliquet 212. Ce ressort 213 maintient le deuxième cliquet 212 engagé avec les deuxièmes dents 136. On notera que le deuxième cliquet 212 traverse axialement la paroi 34a du demi-carter intermédiaire 34 par l'ouverture 35b (cf. figures 3B et 4).

La deuxième came 232 s'étend azimutalement sur le pourtour intérieur de la poignée 26, et plus particulièrement de l'élément de poignée 26a. La deuxième came 232 présente une extrémité azimutale biseautée 232a qui coopère avec le deuxième cliquet 212 de manière à désengager le deuxième cliquet 212 des deuxièmes dents 136. Pour ce faire, le deuxième cliquet 212 présente une lame 212a s'étendant du même côté que la partie d'engagement 212b s'engageant avec les deuxièmes dents 136, par rapport à l'arbre de palier 212c (i.e. selon la direction azimutale), l'extrémité azimutale biseautée 232a s'engageant dessous la lame 212a de manière à soulever la lame 212a et à faire pivoter le deuxième cliquet 212 afin de contrer les efforts du ressort 213 et de désengager la partie d'engagement 212b des deuxièmes dents 136 (cf. fig. 11A et 11D). Dans cet exemple, le deuxième cliquet 212 est plus large (i.e. selon la direction axiale) que la deuxième roue 130 de manière à ce que la deuxième came 232 coopère avec le deuxième cliquet 212 sans interférer avec la deuxième roue 130.

Le troisième cliquet 214 est monté en rotation sur l'élément fixe 24, et plus particulièrement sur la saillie 24b3. Le trou 24b31 forme un palier pour le troisième cliquet 214. Par ailleurs, le trou 32c du demi-carter extérieur 32 forme un palier complémentaire pour le troisième cliquet 214. Le ressort à torsion 215 coopère avec l'élément fixe 24 et avec le troisième cliquet 214. Ce ressort 215 maintient le troisième cliquet 214 désengagé d'avec les troisièmes dents 138. On notera que le troisième cliquet 214 traverse axialement la paroi 34a du demi-carter intermédiaire 34 par l'ouverture 35c (cf. figures 3B et 4).

La troisième came 234 s'étend azimutalement sur le pourtour intérieur de la poignée 26, et plus particulièrement de l'élément de poignée 26a. La troisième came 234 présente une extrémité azimutale biseautée 234a qui coopère avec le troisième cliquet 214 de manière à engager le troisième cliquet 214 avec les troisièmes dents 138. Pour ce faire, le troisième cliquet 214 présente une lame 214a s'étendant du côté opposé à la partie d'engagement 214b s'engageant avec les troisièmes dents 138, par rapport aux arbres de palier 214c (i.e. selon la direction azimutale), l'extrémité azimutale biseautée 234a s'engageant dessous la lame 214a de manière à soulever la lame 214a et à faire pivoter le deuxième cliquet 214 afin de contrer les efforts du ressort 215 et d'engager la partie d'engagement 214b avec une troisième dent 138 (cf. fig. 11A et 11D). Dans cet exemple, le troisième cliquet 214 est plus large que la deuxième roue 130 de manière à ce que la troisième came 234 coopère avec le troisième cliquet 214 sans interférer avec la deuxième roue 130.

Les premières cames 230 coopèrent avec les premiers cliquets 210 dans le sens de rotation R2 en s'engagent sous les premiers cliquets 210 par l'arrière, i.e. du côté opposé où s'étend l'extrémité 210a des cliquets 210 coopérant avec les dents 111 par rapport à l'arbre de palier 210b. La deuxième came 232 coopère avec le deuxième cliquet 212 en s'engagent sous le deuxième cliquet 232 par l'avant, i.e. du côté où s'étend la partie d'engagement 212b par rapport à l'arbre de palier 212c. La troisième came 234 coopère avec le troisième cliquet 214 en s'engageant sous le troisième cliquet 214 par l'arrière, i.e. du côté opposé au côté où s'étend la partie d'engagement 214b par rapport à l'arbre de palier 214c. Les premiers cliquets 210 et le deuxième cliquet 212 sont orientés azimutalement dans le même sens, tandis que le troisième cliquet 214 est orienté azimutalement à l'opposé des premiers et deuxième cliquets 210 et 212. L'orientation azimutale d'un cliquet est indiquée par le sens azimutal vers lequel s'étend l'extrémité ou la partie d'engagement d'un cliquet depuis son arbre de palier.

Les ressorts de rappel 220a et 220b sont disposés dans le logement 221 ménagé dans la poignée 26. Le logement 221 reçoit également la saillie axiale 24b5. Les ressorts de rappel 220a et 220b sont des ressorts de compression qui coopèrent azimutalement en appui avec la saillie axiale 24b5 de la saillie radiale 24b3 de l'élément fixe 24 d'une part, et avec les parois radiales du logement 221 d'autre part. Ces ressorts de rappel ramènent automatiquement la poignée 26 en position neutre N. Selon une variante, les ressorts de rappel 220a et 220b peuvent être remplacés par un ou plusieurs ressorts à torsion.

Dans cet exemple, la première bague 24a, les ressorts 211, 213, 215, 220a, 220b, et la vis de fixation non représentée sont en métal. Les arbres de paliers 210b des premiers cliquets 210 sont préférentiellement en métal mais peuvent, selon une variante, être en plastique. Les arbres 212c et 214c sont en plastique mais peuvent être, selon une variante, en métal. L'habillage de poignée 26b est en caoutchouc. Les autres éléments de la manette 20 sont en plastique.

FONCTIONNEMENT DES MOYENS DE COUPLAGE

Les moyens de couplage 100 sont configurés pour coupler en rotation la poignée 26 et l'élément d'entrainement 28 de sorte que la course angulaire de l'élément d'entrainement 28 est inférieure à la course angulaire de la poignée 26. En effet, dans le premier sens de rotation R1 les premiers cliquets 210 sont engagés avec les premières dents 111 de la première roue 110, et donc la poignée 26 entraine la première roue 110 en rotation d'une même course angulaire. Ainsi, la première roue 110 entraine en rotation l'élément intermédiaire 120 qui lui-même entraine la deuxième roue 130. L'élément d'entrainement 28 étant solidaire de la deuxième roue 130, la rotation de la deuxième roue 130 entraine l'élément d'entrainement 28 d'une même course angulaire.

Sur les figures 5A, 5B et 5C, les sens de rotations R1 et R2 indiquent les sens de rotation de la poignée 26 et de la première roue 110 tandis que les sens de rotation R'1 et R'2 indiquent les sens de rotation de la deuxième roue 130 et de l'élément d'entrainement 28. Dans cet exemple, les sens R1 et R'1 sont orientés dans le même sens, et par conséquent, les sens R2 et R'2 sont également orientés dans le même sens. Bien entendu, selon une variante, les sens R1 et R'1 peuvent être orientés en sens contraire.

Comme représenté sur la figure 5B, la course en rotation β1 de la première roue 110 est supérieure à la course en rotation β2 de la deuxième roue 130. Bien entendu, on comprend que le ratio entre la course angulaire β1 et la course angulaire β2 est le même que, la première roue 110 soit entraînée selon le premier sens R1 ou selon le second sens R2, ou encore que la deuxième roue 130 soit déplacée selon le premier sens R'1 ou selon le second sens R'2.

Ainsi, la poignée 26 étant couplée en rotation avec la première roue 110 dans le sens de rotation R1 et l'élément d'entrainement 28 étant fixée de la deuxième roue 130, lorsque la poignée 26 est entraînée d'une course angulaire β1, l'élément d'entrainement 28 est entrainé d'une course angulaire β2 inférieure à la course angulaire β1. Ainsi, l'élément d'entrainement 28 entraine l'extrémité du câble de dérailleur 16a à l'opposé de la force de rappel F (cf. fig. 5B) générée par les ressorts de rappel du dérailleur 14. Inversement, lorsque la deuxième roue 130 peut se déplacer selon le second sens R'2 grâce à la force de rappel F, la course angulaire β1 de la première roue 110 (mais pas de la poignée 26 qui n'est pas couplée en rotation avec la première roue 110 dans le second sens de rotation R2) est supérieure à la course angulaire β2 de la deuxième roue 130 (et donc de l'élément d'entrainement 28).

Par ailleurs, grâce aux rapports des rayons des différents éléments de la manette 20, l'effort appliqué par l'utilisateur au niveau de la poignée 26 pour contrer la force de rappel F est réduit par rapport à une manette dont les moyens de couplage ne réduisent pas la course angulaire de l'élément d'entrainement par rapport à la course angulaire de la poignée.

En effet, dans cet exemple, le rapport des rayons de la troisième roue 122 et de la quatrième roue 124 permet de multiplier l'effort appliqué par l'utilisateur sur la première roue 110 par un coefficient C1 :

$$C1 = RC/RD = 9.8/4.4 = 2.23$$

Ce coefficient C1 supérieur à 1 (un) est une conséquence de la réduction de déplacements opérée entre la première roue 110 et la deuxième roue 130 des moyens de couplage 100.

Par ailleurs, la différence entre les rayons de la première roue 110 et de la poignée 26 forme un bras de levier qui multiplie l'effort appliqué par l'utilisateur sur la poignée par un coefficient C2 :

$$C2 = RA/RB = 20.6/15.5 = 1.33$$

En outre, la différence entre les rayons de la deuxième roue 130 et de l'élément d'entrainement 28 forme également un bras de levier qui multiplie l'effort reçu par la deuxième roue 130 par un coefficient C3 :

$$C3 = RE/RF = 20.9/16.8 = 1.24$$

Au final, grâce à ces différents coefficients, l'effort appliqué par l'utilisateur sur la poignée 26 est multiplié par un coefficient global C égal au produit de tous ces coefficients C1, C2 et C3 soit :

$$C = C1 \times C2 \times C3 = 3.68$$

Ainsi, l'effort à fournir sur la poignée 26 pour contrer la force F et entrainer l'élément d'entrainement 28 dans la direction R'1 (et donc passer les vitesses) est réduit de ce coefficient C.

FONCTIONNEMENT DES MOYENS DE POSITIONNEMENT SEQUENTIEL

En référence à la figure 5C, les moyens de positionnement séquentiel 200 (non représentés) coopèrent avec les moyens de couplage 100 et avec la poignée rotative 26, de sorte que lorsque la poignée rotative 26 est déplacée dans un premier sens de rotation de commande R1 depuis une position neutre N vers une première position P1 ou dans un second sens de rotation de commande R2, opposé au premier sens de rotation de commande R1, depuis position neutre N vers une seconde position P2, la poignée rotative 26 est ramenée automatiquement en position neutre N par les moyens de positionnement séquentiel 200, l'élément d'entrainement 28 étant déplacé d'un angle prédéterminée β dans un premier sens de rotation d'entrainement R'1 depuis une première position initiale P' vers une première position finale P'1 lors des déplacements de la poignée rotative 26 entre la position neutre N et la première position P1, tandis que l'élément d'entrainement 28 est déplacé de l'angle prédéterminée β dans un second sens de rotation d'entrainement R'2, opposé au premier sens de rotation d'entrainement R'1, depuis une deuxième position initiale P' (dans cet exemple, la deuxième position initiale et similaire la première position initiale) vers une deuxième position finale P'2 lors des déplacements de la poignée rotative 26 entre la position neutre N et la seconde position P2.

Dans cet exemple, les moyens de couplage 100 formant un réducteur de déplacement, on constate sur la figure 5C que la course angulaire de la poignée 26 entre la position neutre N et la première position P1 et la course angulaire entre la position neutre N et la second position P2 sont supérieures à la course angulaire de l'élément d'entrainement 28 entre la position initiale P' et la première position finale P'1 et à la course angulaire entre la position initiale P' et la deuxième position finale P'2.

Dans cet exemple, le premier sens de rotation de commande R1 est orienté dans le même sens que le premier sens de rotation d'entrainement R'1, et donc le second sens de rotation de commande R2 est orienté dans le même sens que le second sens de rotation d'entrainement R'2, mais peuvent bien entendu être opposés selon une variante. Par la suite, les premier et second sens de commande R1 et R2 désignent également les rotations tant de la poignée 26 que de la première roue 110, tandis que les premier et second sens de rotation d'entrainement R'1 et R'2 désignent également les rotations tant de l'élément d'entrainement 28 que de la deuxième roue 130.

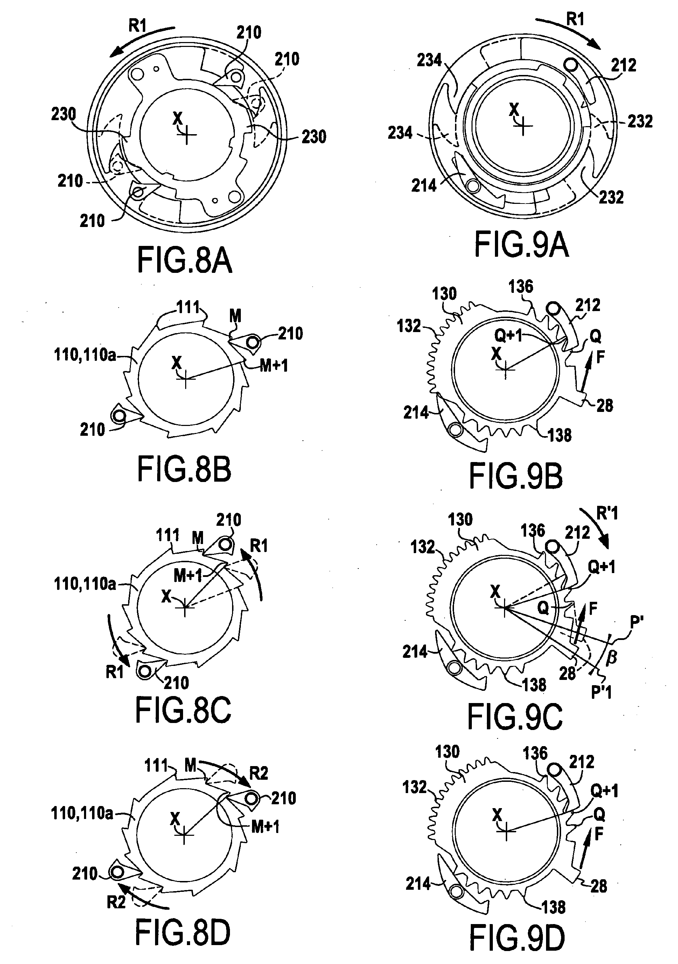

Dans la position neutre N de la poignée 26, les premiers cliquets 210 sont engagés avec les premières dents 111. La forme des premières dents 111 est telle que les premiers cliquets 210 autorisent les rotations de la première roue 110 dans le premier sens de rotation de commande R1 tandis que les premiers cliquets 210 bloquent les rotations de la première roue 110 dans le second sens de rotation R2 (cf. fig. 8A). Les premiers cliquets 210 étant montés sur la poignée 26 et donc étant mobile en rotation autour de l'axe principal X, on comprend que les premiers cliquets 210 peuvent entrainer la première roue 110 dans le premier sens de rotation de commande R1 (cf. fig. 8C) mais qu'ils ne peuvent pas entrainer la première roue 110 dans le second sens de rotation R2 (cf. fig. 8D).

Par ailleurs, dans la position neutre N de la poignée 26, le deuxième cliquet 212 est engagé avec une deuxième dent 136 tandis que le troisième cliquet 214 est désengagé des troisièmes dents 138 (cf. fig. 9B). Ainsi, les mouvements de rotation de la deuxième roue 130 ne sont pas bloqués par le troisième cliquet 214. La forme des deuxièmes dents 136 est telle que le deuxième cliquet 212 autorise les rotations de la deuxième roue 130 dans le premier sens de rotation d'entrainement R'1 (cf. fig. 9C) tandis que le deuxième cliquet 212 bloque les rotations de la deuxième roue 130 dans le second sens de rotation d'entrainement R'2 (cf. fig. 9D).

Ainsi, dans la position neutre N, les rotations de la première roue 110 dans le second sens de commande R2 sont bloquées par les premiers cliquets 210. En outre, les rotations de la deuxième roue 130 dans le second sens d'entrainement R'2 sont bloquées par le deuxième cliquet 212. On notera que par le biais de l'élément intermédiaire 120, en bloquant les rotations de la première roue 110 dans second sens de commande R2, les premiers cliquets 210 bloquent également les rotations de la deuxième roue 130 dans le second sens d'entrainement R'2. De même, par le biais de l'élément intermédiaire 120, en bloquant les rotations de la deuxième roue 130 dans le second sens d'entrainement R'2, le deuxième cliquet 212 bloque également les rotations de la première roue 110 dans second sens de commande R2. Ceci permet de compenser les jeux éventuels entre les dents des différents moyens de couplage 100 d'une part et entre les dents des moyens de couplage 100 et les cliquets des moyens de positionnement séquentiel 200 d'autre part, et de toujours assurer un blocage dans la direction R2, et donc R'2 (et vice versa).

Par ailleurs, dans la position neutre N, l'effort de rappel F, tendant à entrainer la deuxième roue 130 dans le second sens d'entrainement R'2, bloque les rotations de la deuxième roue 130 dans le premier sens d'entrainement R'1. Par le biais de l'élément intermédiaire 120, cet effort de rappel bloque également les rotations de la première roue 110 dans le second sens de commande R2.

On va maintenant décrire les mouvements des roues 110 et 130 et leurs interactions avec les cliquets 210, 212 et 214 pendant les mouvements de la poignée 26 entre la position neutre N et la première position P1.

Les figures 8A et 9A représentent l'interaction des cliquets avec les cames lors des mouvements la poignée 26 entre la position neutre N et la première position P1, c'est-à-dire lorsque la poignée 26 est amenée de la position neutre N vers la première position P1, ou lorsque la poignée 26 est ramenée de la première position P1 vers la position neutre N. La figure 8A est une coupe représentant les cliquets 210 et les premières cames 230 vue selon la flèche VIII de la figure 4. La figure 9A est une coupe des cliquets 212 et 214 et des cames 232 et 234 vue selon la flèche IX de la figure 4. Sur les figures 8A et 9A, les traits discontinus représentent les éléments (cames 232 et 234 et premiers cliquets 210) liés à la poignée 26 en position neutre N, tandis que ces mêmes éléments sont représentés en traits continus lorsque la poignée 26 est dans la première position P1.

Aucune des cames 230, 232 et 234 ne coopère avec les premiers, deuxième et troisième cliquets 210, 211 et 214 lors des mouvements de la poignée 26 entre la position neutre N et la position P1.

Pour rappel, les premiers cliquets 210 sont solidaires de la poignée 26, et sont donc entrainés en rotation par la poignée 26 autour de l'axe principal X, tandis que les deuxièmes et troisièmes cliquets 212 et 214 sont solidaires de l'élément fixe 24, et sont donc immobiles par rapport à l'axe principal X. Les premières cames 230 sont solidaires de l'élément fixe 24, et sont donc immobiles tandis que les cames 232 et 234 sont solidaires de la poignée 26, et sont donc entrainées en rotation par la poignée 26 autour de l'axe principal X.

Les figures 8B à 8D représentent la première roue 110, et plus particulièrement la première portion annulaire 110a, et les premiers cliquets 210 en coupe vue selon la flèche VIII de la figure 4. Les figures 9B à 9D représentent la deuxième roue 130, le deuxième cliquet 212 et le troisième cliquet 214 en coupe vue selon la flèche IX de la figure 4.

Les figures 8B et 9B correspondent à une configuration où la poignée 26 est dans la position neutre N. Les figures 8C et 9C correspondent à une configuration où la poignée 26 a pivoté dans le premier sens de commande R1 et a été amenée dans la première position P1 depuis la position neutre des figures 8B et 9B. Les figures 8D et 9D correspondent à une configuration où la poignée 26 a pivoté dans le second sens de commande R2 et a été ramenée dans la position neutre N depuis la première position P1 des figures 8C et 9C.

Lorsque la poignée 26 est amenée de la position neutre N vers la première position P1 selon le premier sens de rotation de commande R1, chaque premier cliquet 210 reste engagé avec une première dent 111 et entrainent la première roue 110 dans le premier sens de rotation de commande R1 (cf. figures 8B et 8C), ce qui a pour conséquence d'entrainer la deuxième roue 130, et donc l'élément d'entrainement 28 dans le premier sens de rotation d'entrainement R'1 (cf. figure 9B et 9C). La position des premiers cliquets 210 et le rayon repérant la position azimutale de la première roue 110 correspondant à la figure 8B sont représentés en traits discontinus sur la figure 8C. La position de l'élément d'entrainement 28 et le rayon représentant la position azimutale de la deuxième roue 130 correspondant à la figure 9B sont représentés en traits discontinus sur la figure 9C.

Ainsi, entre la figure 8B et la figure 8C, la première roue 110 et les premiers cliquets 110 ont pivotés dans le premier sens de rotation de commande R1 tandis qu'entre la figure 9B et la figure 9C, seule la deuxième roue 130 a pivoté selon le premier sens de rotation d'entrainement R'1. Au cours de ce mouvement, le deuxième cliquet 212 immobile en rotation autour de l'axe principal X, se désengage de la deuxième dent 136 numéro Q pour s'engager avec la deuxième dent 136 numéro Q+1 (cf. figures 9B et 9C). Ainsi l'élément d'entrainement 28 est déplacé dans le premier sens de rotation d'entrainement R'1 d'un angle prédéterminé $\beta$ de la première position initiale P' à la première position finale P'1, et reste boqué dans cette position grâce au deuxième cliquet 212.

Lors du passage du deuxième cliquet 212 de la deuxième dent 136 Q à deuxième dent 136 Q+1, les premiers cliquets 210 restent engagés avec la première dent 111 numéro M de sorte que la force de rappel F ne peut pas ramener l'élément d'entrainement 28 de la première position finale P'1 à la première position initiale P'.

Lorsque la poignée 26 est dans la première position P1, le ressort de rappel 220a est comprimé entre la troisième came 234 et l'ergot 24b5 et tend à ramener la poignée 26 en position neutre N. Ainsi, quand l'utilisateur relâche la poignée 26, cette dernière revient automatiquement en position neutre N. Bien entendu, l'utilisateur peut également ramener lui-même la poignée 26 en position neutre N.

Au cours du mouvement de la poignée 26 de la première position P1 vers la position neutre N selon le second sens de rotation de commande R2, les premiers cliquets 210 se désengagent des premières dents 111 numéro M pour s'engager avec les premières dents 111 numéro M+1 (cf. figures 8B et 8C). Le deuxième cliquet 212 étant engagé avec une deuxième dent 136 pendant le retour de la poignée 26 de la première position P1 vers la position neutre N, les moyens de couplage 100 sont bloqués en rotation et la force de rappel F ne peut pas ramener l'élément d'entrainement 28 de la première position finale P'1 à la première position finale P' (cf. figures 9B et 9C). On comprend donc que les première et deuxième roues 110 et 130 ne bougent pas entre les figures 8C, 9C et 8D, 9D, seuls les premiers cliquets 210 tournant (de concert avec la poignée 26) dans le second sens de rotation de commande R2. La position des premiers cliquets 210 correspondant à la figure 8C est représentée en traits discontinus sur la figure 8D.

Lors des mouvements de la poignée 26 entre la position neutre N et la première position P1, il y a toujours au moins un cliquet parmi les premiers cliquets 210 et le deuxième cliquet 212 qui est engagé avec les premières dents 111 ou les deuxièmes dents 136.

Ainsi, au cours des mouvements de la poignée 26 entre la position neutre N et la première position P1, le passage de l'élément d'entrainement 28 de la position initiale P' à la première position finale P'1 est effectué en une seule étape lors du passage de la poignée 26 de la position neutre N à la première position P1. Lors des mouvements de la poignée 26 entre la position neutre N et la première position P1, l'élément d'entrainement 28 est ainsi entrainé d'un angle prédéterminé $\beta$ dans le premier sens de rotation d'entrainement R'1 depuis la position initiale P' vers la position finale P'1 (cf. fig.9C). On passe ainsi d'une vitesse T à une vitesse T+1. Pour passer à la vitesse T+2, l'utilisateur amène de nouveau la poignée 26 de la position neutre N à la première position P1, et ainsi de suite. Bien entendu, selon une variante, le passage de la poignée 26 de la position neutre N à la première position P1 permet de passer de la vitesse T à une vitesse T-1.

On va maintenant décrire les mouvements des roues 110 et 130 et leurs interactions avec les cliquets 210, 212 et 214 pendant les mouvements de la poignée 26 entre la position neutre N et la seconde position P2.

Les figures 10A et 11A représentent l'interaction des cliquets avec les cames lors des mouvements la poignée 26 entre la position neutre N et la seconde position P2, c'est-à-dire lorsque la poignée 26 est amenée de la position neutre N vers la seconde position P2 selon le second sens de rotation de commande R2, ou lorsque la poignée 26 est amenée de la seconde position P2 vers la position neutre N selon le premier sens de rotation de commande R1. La figure 10A est une coupe représentant les cliquets 210 et les premières cames 230 vue selon la flèche VIII de la figure 4. La figure 11A est une coupe représentant les cliquets 212 et 214 et les cames 232 et 234 vue selon la flèche IX de la figure 4. Sur les figures 10A et 11A, les traits discontinus représentent les éléments (cames 232 et 234 et premiers cliquets 210) liés à la poignée 26 en position neutre N, tandis que ces mêmes éléments sont représentés en traits continus lorsque la poignée 26 est dans la seconde position P2.

En référence à la figure 10A, lorsque la poignée 26 est amenée de la position neutre N à la seconde position P2, chaque première came 230 coopère avec un premier cliquet 210, ce qui a pour effet de désengager les premiers cliquets 210 d'avec les premières dents 211. La première roue 110 est alors libre de tourner dans le second sens de commande R2.

En référence à la figure 11A, lorsque la poignée 26 est amenée de la position neutre N à la seconde position P2, la troisième came 234 coopère d'abord avec le troisième cliquet 214 qui s'engage avec une troisième dent 138. Ainsi, la deuxième roue 130 est bloquée en rotation tant dans le premier sens d'entrainement R'1 que dans le second sens de rotation d'entrainement R'2. Ensuite, la deuxième came 232 coopère avec le deuxième cliquet 212 qui se désengage alors des deuxièmes dents 136. On comprend que cet engagement successif de la troisième came 234 avec le troisième cliquet 214 puis de la deuxième came 232 avec le deuxième cliquet 212 est obtenu grâce à une distance azimutale dans la position neutre N de la poignée 26 plus grande entre la deuxième came 232 et le deuxième cliquet 212 que la distance azimutale entre la troisième came 234 et le troisième cliquet 214.

Lors de la rotation de la poignée 26 selon le second sens de rotation de commande R2 de la position neutre N à la deuxième position P2, les premières cames 230 coopèrent en premier avec les premiers cliquets 210 qui commencent ainsi à se dégager des premières dents 111 en premier. Ensuite, la troisième came 234 coopère avec le troisième cliquet 214, le troisième cliquet 214 s'engageant alors avec les troisièmes dents 138, et encore après la deuxième came 232 coopère avec le deuxième cliquet 212, ce dernier se dégageant ainsi des deuxièmes dents 136.

Les figures 10B à 10F représentent la première roue 110, et plus particulièrement la première portion annulaire 110a, et les premiers cliquets 210 en coupe vue selon la flèche VIII de la figure 4. Les figures 11B à 11F représentent la deuxième roue 130, le deuxième cliquet 212 et le troisième cliquet 214 en coupe vue selon la flèche IX de la figure 4.

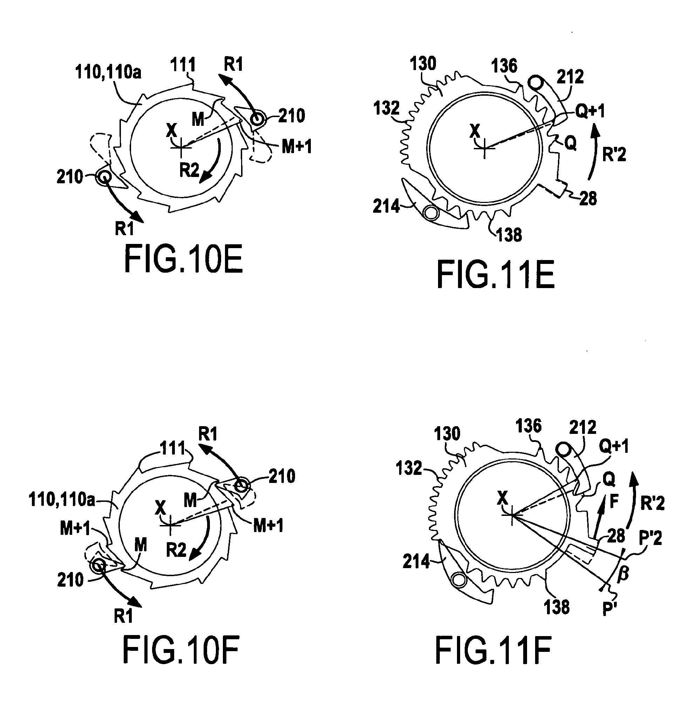

Les figures 10B et 11B correspondent à une configuration où la poignée 26 est dans la position neutre N. Les figures 10C et 11C correspondent à une configuration où la poignée 26 est amenée dans une position intermédiaire entre la position neutre N et la seconde position P2 depuis la position neutre des figures 10B et 11B, dans laquelle la deuxième came 232 ne coopère pas encore avec le deuxième cliquet 212, tandis que les premières cames 230 coopèrent avec les premiers cliquets 210 et que la troisième came 234 coopère avec le troisième cliquet 214. Les figures 10D et 11D correspondent à une configuration où la poignée 26 a été amenée dans la seconde position P2 depuis la position intermédiaire des figures 10C et 11C. Les figures 10E et 11E correspondent à une configuration où la poignée 26 a été ramenée dans la position intermédiaire des figures 10C et 11C depuis la seconde position P2 des figures 10D et 11D. Les figures 10F et 11F correspondent à une configuration où la poignée 26 a été ramenée dans la position neutre N depuis la position intermédiaire des figures 10E et 11E.

Dans cet exemple, on comprend que les positions intermédiaires de la poignée 26 correspondant aux figures 10C, 11C, 10E et 11E correspondent toutes à la même position intermédiaire de la poignée 26.

Les figures 10B et 11B correspondent respectivement aux figures 8D et 9D, où la poignée 26 est dans la position neutre N, les premiers cliquets 210 étant engagés avec des premières dents 111 numéro M+1 et le deuxième cliquet 212 étant engagé avec la deuxième dent 136 numéro Q+1.

Lors du passage de la poignée 26 de la position neutre N à la position intermédiaire, les premiers cliquets 210 ont pivoté selon le deuxième sens de rotation de commande R2 (car ils sont liés à la poignée 26). Le blocage de la première roue 110 par les premiers cliquets 210 dans le second sens de rotation de commande R2 est relâché tandis que le deuxième cliquet 212 bloque toujours la deuxième roue dans le second sens de rotation d'entrainement R'2. Le troisième cliquet 214 commence à s'engager entre deux troisièmes dents 138. La position des premiers cliquets 210 correspondant à la figure 10B est représentée en traits discontinus sur la figure 10C.

Lors du passage de la poignée 26 de la position intermédiaire à la seconde position P2 dans le second sens de rotation de commande R2 (cf. fig. 10D et 11D), les premières cames 230 coopèrent avec les premiers cliquets 210 (qui ont donc encore pivotés selon le second sens de rotation de commande R2 par rapport à la figure 10C), la deuxième came 232 coopère avec le deuxième cliquet 212 et la troisième came 234 coopère avec le troisième cliquet 214 de sorte que les premiers cliquets 210 sont complètement désengagés d'avec les premières dents 111 tandis que le deuxième cliquet 212 est complètement désengagé d'avec les deuxièmes dents 136 et que le troisième cliquet 214 est totalement engagé avec les troisièmes dents 138.

L'espacement angulaire entre chaque troisième dent 138 permet à la force de rappel F de déplacer la deuxième roue 130 dans le second sens d'entrainement R'2 de sorte que le deuxième cliquet 212, et plus particulièrement la dent du deuxième cliquet 212 coopérant avec les deuxièmes dents 136, est en position pour s'engager avec la deuxième dent 136 numéro Q (cf. fig. 11D). On comprend donc que l'espacement angulaire des troisièmes dents 138 est tel qu'il permet un mouvement de rotation de la deuxième roue 130 lorsque le troisième cliquet 214 est engagé avec les troisièmes dents 138 permettant au deuxième cliquet 212 de passer à l'aplomb d'une deuxième dent 136, afin de passer d'une deuxième dent Q+1 à une deuxième dent Q.

La rotation de la deuxième roue 130 dans le second sens d'entrainement R'2 entraine la rotation de la première roue 110 dans le second sens de commande R2. Ainsi, les premiers cliquets 210 se retrouvent en position pour s'engager avec les premières dents 111 numéro M (cf. fig. 10D).

La position des premiers cliquets 210 et le rayon repérant la position azimutale de la première roue 110 correspondant à la figure 10C sont représentés en traits discontinus sur la figure 10D. La position de l'élément d'entrainement 28 et le rayon représentant la position azimutale de la deuxième roue 130 correspondant à la figure 11C sont représentés en traits discontinus sur la figure 11D. On comprend donc que la première roue 110 et les premiers cliquets 210 ont pivotés dans le second sens de rotation de commande R2 tandis que la deuxièmes roue 130 a pivoté selon le second sens de rotation d'entrainement R'2.

Lorsque la poignée 26 est à la seconde position P2, le ressort de rappel 220b est comprimé entre la deuxième came 232 et l'ergot 24b5 et tend à ramener la poignée 26 en position neutre N. Ainsi, quand l'utilisateur relâche la poignée 26, cette dernière revient automatiquement en position neutre N. Bien entendu, l'utilisateur peut également ramener lui-même la poignée 26 en position neutre N.

Lors du mouvement de la poignée 26 depuis la seconde position P2 vers la position neutre N, les cames 230, 232 et 234 et les cliquets 210, 212 et 214 se dégagent de leurs coopérations réciproques et les ressorts de rappel 211, 213 et 215 (cf. fig. 3A et 3B) ramènent les cliquets 210, 212 et 214 dans leurs configurations en position neutre N de la poignée 26.

Ainsi, lors du retour de la poignée 26 de la seconde position P2 à la position intermédiaire, les premiers cliquets 210 suivant le mouvement de la poignée 26, s'engagent avec les premières dents 111 numéro M et le deuxième cliquet 212 s'engage avec la deuxième dent 136 numéro Q (i.e. entre la dent Q et la dent Q+1) tandis que le troisième cliquet 214 se dégage des troisièmes dents 138 (cf. fig.10E et fig. 11E). Sur la figure 11E le deuxième cliquet 212 est en appui radial sur la dent 136 numéro Q+1 grâce au ressort de rappel 213 qui ramène le deuxième cliquet 212 entre les deux dents Q et Q+1. Au fur et à mesure que le troisième cliquet 214 se dégage des troisièmes dents 138 et que les premiers cliquets 210 et le deuxième cliquet 212 s'engagent respectivement avec les premières dents 111 numéro M et la deuxièmes dent numéro Q, la force de rappel F déplace la deuxième roue 130 dans le second sens d'entrainement R'2. En conséquence, la première roue 110 est entrainée dans le second sens de rotation de commande R2.

La position des premiers cliquets 210 et le rayon repérant la position azimutale de la première roue 110 correspondant à la figure 10D sont représentés en traits discontinus sur la figure 10E. La position de l'élément d'entrainement 28 et le rayon représentant la position azimutale de la deuxième roue 130 correspondant à la figure 11D sont représentés en traits discontinus sur la figure 11E. On comprend donc que la première roue 110 a pivoté dans le second sens de rotation de commande R2 tandis que les premiers cliquets 210 ont pivoté dans le premier sens de rotation de commande R1. La deuxième roue 130 a pivoté selon le second sens de rotation d'entrainement R'2.

Lors du retour de la poignée 26 de la position intermédiaire à la position neutre N, les mouvements décrits lors du passage de la poignée 26 de la seconde position P2 à la position intermédiaire se poursuivent jusqu'à ce que le deuxième cliquet 212 soit en appui contre la deuxième dent 136 numéro Q et bloque la rotation de la deuxième roue 130 dans le second sens de rotation d'entrainement R'2. Les premiers cliquets 210 sont amenés en appui azimutal sur les premières dents 111 et le troisième cliquet 214 est totalement désengagé des troisièmes dents 138. Lorsque la poignée 26 est revenue en position neutre N, les premiers cliquets 210 coopèrent avec les premières dents 111 numéro M, le deuxièmes cliquet 212 coopère avec la deuxième dent 136 numéro Q et le troisième cliquet 214 ne coopère avec aucune troisième dent 138. L'élément d'entrainement 28 est alors dans la deuxième position finale P'2.

La position des premiers cliquets 210 et le rayon repérant la position azimutale de la première roue 110 correspondant à la figure 10E sont représentés en traits discontinus sur la figure 10F. La position de l'élément d'entrainement 28 et le rayon représentant la position azimutale de la deuxième roue 130 correspondant à la figure 11E sont représentés en traits discontinus sur la figure 11F. On comprend donc que la première roue 110 a pivoté dans le second sens de rotation de commande R2 tandis que les premiers cliquets 210 ont pivoté dans le premier sens de rotation de commande R1. La deuxième roue 130 a pivoté selon le second sens de rotation d'entrainement R'2.

Ainsi, au cours des mouvements de la poignée 26 entre la position neutre N et la seconde position P2, le passage de l'élément d'entrainement 28 de la deuxième position initiale P' à la deuxième position finale P'2 est effectué en deux étapes : une première étape lors du passage de la poignée 26 de la position neutre N à la deuxième position P2, et une deuxième étape lors du retour de la poignée 26 de la deuxième position P2 à la position neutre N.

Lors des mouvements de la poignée 26 entre la position neutre N et la seconde position P2, l'élément d'entrainement 28 est ainsi entrainé d'un angle prédéterminé β dans le second sens de rotation d'entrainement R'2 depuis la deuxième position initiale P' vers la deuxième position finale P'2 (cf. fig. 11F). On passe ainsi de la vitesse T+1 à une vitesse T. Pour passer à la vitesse T-1, l'utilisateur amène de nouveau la poignée 26 de la position neutre N à la seconde position P2, et ainsi de suite. Bien entendu, selon une variante, le passage de la poignée 26 de la position neutre N à la seconde position P2 permet de passer de la vitesse T+1 à une vitesse T+2.

On note que la position initiale P' de la figure 11C correspond à la première position finale P'1 de la figure 9C tandis que la deuxième position finale P'2 de la figure 11C correspond à la position initiale P' de de figure 9C.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation décrits peuvent être combinées dans des modes de réalisation additionnels. Par conséquent, la description et les dessins doivent être considérés dans un sens illustratif plutôt que restrictif.

## Revendications

**1.** Manette de changement de vitesse pour bicyclette, présentant un jour (22) s'étendant selon un axe principal (X), ladite manette (20) étant configurée pour être montée de manière coaxiale sur une poignée de guidon (12a) de bicyclette, ladite manette (20) comprenant :

   - un élément fixe (24) configuré pour être rendu solidaire de la poignée de guidon (12a),
   - une poignée rotative (26) coaxiale à l'axe principal (X) et mobile en rotation autour de l'axe principal (X),
   - un élément d'entraînement (28) mobile en rotation autour de l'axe principal (X) et configuré pour entraîner l'extrémité (16a) d'un câble (16) de commande d'un dérailleur (14),
   - des moyens de couplage (100) configurés pour coupler en rotation la poignée rotative (26) et l'élément d'entraînement (28) de sorte que la course angulaire de l'élément d'entraînement (28) est inférieure à la course angulaire de la poignée rotative (26), les moyens de couplage (100) comprenant une première roue dentée (110) coaxiale à l'axe principal (X) et couplée en rotation avec la poignée rotative (26),

ladite manette (20) étant **caractérisée en ce que** les moyens de couplage (100) comprennent également une deuxième roue dentée (130) coaxiale à l'axe principal (X) et couplée en rotation avec l'élément d'entraînement (28) et un élément intermédiaire (120) présentant un axe de rotation parallèle à, et distinct de, l'axe principal (X) et couplant en rotation la première roue dentée (110) et la deuxième roue dentée (130).

**2.** Manette selon la revendication 1, dans laquelle l'élément intermédiaire (120) présente une troisième roue dentée (122) engrenant directement la première roue dentée (110), et une quatrième roue dentée (124) solidaire de la troisième roue dentée (122), ladite quatrième roue dentée (124) engrenant directement la deuxième roue dentée (130).

3. Manette selon la revendication 2, dans laquelle le rayon (RB) de la première roue dentée (110) est supérieur au rayon (RC) de la troisième roue dentée (122), le rayon (RB) de la troisième roue dentée (122) est supérieur au rayon (RD) de la quatrième roue dentée (124), le rayon (RD) de la quatrième roue dentée (124) est inférieur au rayon (RE) de la deuxième roue dentée (130), et le rayon (RB) de la première roue dentée (110) est inférieur au rayon (RE) de la deuxième roue dentée (130).

4. Manette selon l'une quelconque des revendications 1 à 3, dans laquelle le rapport de transmission entre la deuxième roue dentée (130) et la première roue dentée (110) est compris entre 2 et 4.

5. Manette selon l'une quelconque des revendications 1 à 4, dans laquelle la deuxième roue dentée (130) présente des dents de couplage (132) avec l'élément intermédiaire (120) sur uniquement un premier secteur angulaire ($\alpha$1), tandis que l'élément d'entrainement (28) est disposé sur uniquement un deuxième secteur angulaire ($\alpha$2) de ladite deuxième roue dentée (130) distinct du premier secteur angulaire ($\alpha$1).

6. Manette selon l'une quelconque des revendications 1 à 5 dans laquelle le jour (22) est cylindrique et formé dans un manchon cylindrique (30), la poignée rotative (26), l'élément d'entrainement (28), la première roue dentée (110) et la deuxième roue dentée (130) étant montés en rotation autour dudit manchon cylindrique (30).

7. Manette selon la revendication 6, dans laquelle la deuxième roue dentée (130) est logée dans un carter, ledit carter comprenant deux demi-carters (32, 34), un des demi-carters (32) étant solidaire du manchon cylindrique (30).

8. Manette selon la revendication 7, dans laquelle les deux demi-carters forment respectivement un demi-carter extérieur (32) et un demi-carter intermédiaire (34), la première roue dentée (110) étant logée dans un espace (36) ménagé entre la poignée rotative (26), le demi-carter intermédiaire (34) et le manchon (30).

9. Manette selon la revendication 8, dans laquelle la première roue dentée (110) est logée axialement entre la poignée rotative (26) et le demi-carter intermédiaire (34) et radialement entre le manchon cylindrique (30) et la poignée rotative (26).

10. Manette selon l'une quelconque des revendications 7 à 9, dans laquelle les deux demi-carters forment respectivement un demi-carter extérieur (32) et un demi-carter intermédiaire (34), le demi-carter extérieur (32) présentant un arbre (32a), l'élément intermédiaire (120) étant monté en rotation autour dudit arbre (32a), le demi-carter intermédiaire (34) comprenant une paroi (34a) s'étendant selon une direction radiale, et l'élément intermédiaire (120) traversant ladite paroi (34a).

11. Manette selon l'une quelconque des revendications 6 à 10, dans laquelle la poignée rotative (26) coopère avec le manchon (30) par clipsage selon l'axe principal (X).

12. Manette selon l'une quelconque des revendications 6 à 11, dans laquelle l'élément fixe (24) comprend une bague (24a, 24b) emmanchée autour du manchon cylindrique (30), la poignée rotative (26) étant au moins partiellement emmanchée autour de la bague (24a, 24b).

13. Manette selon l'une quelconque des revendications 1 à 12, comprenant un carter (32, 34), une fenêtre (33) étant ménagée dans ledit carter (32, 34), l'élément d'entraînement (28) présentant un curseur (40) visible à travers la fenêtre (33), la position du curseur (40) relativement à la fenêtre (33) formant un index d'indication de vitesse.

14. Manette selon l'une quelconque des revendications 1 à 13, comprenant des moyens de positionnement séquentiel (200) interposés entre la poignée rotative (26) et l'élément d'entrainement (28), configurés de telle sorte que la poignée rotative (26) retourne dans une position neutre (N) après avoir été déplacée dans un premier sens de rotation (R1), ou dans un second sens de rotation (R2) opposé au premier sens de rotation (R1) tandis que l'élément d'entraînement (28) reste à la position à laquelle il a été déplacé grâce audit déplacement de la poignée rotative (26).

**Patentansprüche**

1. Schalthebel für ein Fahrrad, der eine sich entlang einer Hauptachse (X) erstreckende Öffnung (22) aufweist, wobei der Hebel (20) dazu ausgelegt ist, an einem Lenkergriff (12a) eines Fahrrades koaxial angebracht zu werden, wobei der Hebel (20) umfasst:

- ein festes Element (24), das dazu ausgelegt ist, mit dem Lenkergriff (12a) fest verbunden zu werden,
- einen Drehgriff (26), der zu der Hauptachse (X) koaxial und um die Hauptachse (X) drehbeweglich ist,

- ein Antriebselement (28), das um die Hauptachse (X) drehbeweglich und dazu ausgelegt ist, das Ende (16a) eines Seilzugs (16) eines Schaltwerks (14) anzutreiben,

- Kopplungsmittel (100), die für eine Drehkopplung des Drehgriffs (26) und des Antriebselements (28) ausgelegt sind, so dass der Winkelhub des Antriebselements (28) kleiner ist als der Winkelhub des Drehgriffs (26), wobei die Kopplungsmittel (100) ein erstes Zahnrad (110) umfassen, das zu der Hauptachse (X) koaxial ist und mit dem Drehgriff (26) drehgekoppelt ist, wobei der Hebel (20) **dadurch gekennzeichnet ist, dass** die Kopplungsmittel (100) auch ein zweites Zahnrad (130), das zu der Hauptachse (X) koaxial ist und mit dem Antriebselement (28) drehgekoppelt ist, sowie ein Zwischenelement (120) umfassen, das eine Drehachse aufweist, die zu der Hauptachse (X) parallel und von dieser verschieden ist, und das das erste Zahnrad (110) und das zweite Zahnrad (130) drehkoppelt.

2. Hebel nach Anspruch 1, wobei das Zwischenelement (120) ein drittes Zahnrad (122), das direkt mit dem ersten Zahnrad (110) in Eingriff ist, und ein viertes Zahnrad (124), das mit dem dritten Zahnrad (122) fest verbunden ist, aufweist, wobei das vierte Zahnrad (124) direkt mit dem zweiten Zahnrad (130) in Eingriff ist.

3. Hebel nach Anspruch 2, wobei der Radius (RB) des ersten Zahnrades (110) größer ist als der Radius (RC) des dritten Zahnrades (122), der Radius (RB) des dritten Zahnrades (122) größer ist als der Radius (RD) des vierten Zahnrades (124), der Radius (RD) des vierten Zahnrades (124) kleiner ist als der Radius (RE) des zweiten Zahnrades (130) und der Radius (RB) des ersten Zahnrades (110) kleiner ist als der Radius (RE) des zweiten Zahnrades (130).

4. Hebel nach einem der Ansprüche 1 bis 3, wobei das Übersetzungsverhältnis zwischen dem zweiten Zahnrad (130) und dem ersten Zahnrad (110) zwischen 2 und 4 beträgt.

5. Hebel nach einem der Ansprüche 1 bis 4, wobei das zweite Zahnrad (130) Zähne zur Kopplung (132) mit dem Zwischenelement (120) an nur einem ersten Winkelsektor ($\alpha$1) aufweist, während das Antriebselement (28) an nur einem zweiten Winkelsektor ($\alpha$2) des zweiten Zahnrades (130), der von dem ersten Winkelsektor ($\alpha$1) verschieden ist, angeordnet ist.

6. Hebel nach einem der Ansprüche 1 bis 5, wobei die Öffnung (22) zylindrisch ist und in einer zylindrischen Hülse (30) ausgebildet ist, wobei der Drehgriff (26), das Antriebselement (28), das erste Zahnrad (110) und das zweite Zahnrad (130) um die zylindrische Hülse (30) drehbar angebracht sind.

7. Hebel nach Anspruch 6, wobei das zweite Zahnrad (130) in einem Gehäuse aufgenommen ist, wobei das Gehäuse zwei halbe Gehäuse (32, 34) umfasst, wobei eines der halben Gehäuse (32) mit der zylindrischen Hülse (30) fest verbunden ist.

8. Hebel nach Anspruch 7, wobei die beiden halben Gehäuse ein halbes Außengehäuse (32) bzw. ein halbes Zwischengehäuse (34) bilden, wobei das erste Zahnrad (110) in einem Raum (36), der zwischen dem Drehgriff (26), dem halben Zwischengehäuse (34) und der Hülse (30) ausgebildet ist, aufgenommen ist.

9. Hebel nach Anspruch 8, wobei das erste Zahnrad (110) zwischen dem Drehgriff (26) und dem halben Zwischengehäuse (34) axial sowie zwischen der zylindrischen Hülse (30) und dem Drehgriff (26) radial gelagert ist.

10. Hebel nach einem der Ansprüche 7 bis 9, wobei die beiden halben Gehäuse ein halbes Außengehäuse (32) bzw. ein halbes Zwischengehäuse (34) bilden, wobei das halbe Außengehäuse (32) eine Welle (32a) aufweist, wobei das Zwischenelement (120) um die Welle (32a) drehbar angebracht ist, wobei das halbe Zwischengehäuse (34) eine in einer radialen Richtung verlaufende Wand (34a) umfasst und wobei das Zwischenelement (120) die Wand (34a) durchgreift.

11. Hebel nach einem der Ansprüche 6 bis 10, wobei der Drehgriff (26) mit der Hülse (30) entlang der Hauptachse (X) clipsend zusammenwirkt.

12. Hebel nach einem der Ansprüche 6 bis 11, wobei das feste Element (24) einen um die zylindrische Hülse (30) herum aufgeschobenen Ring (24a, 24b) umfasst, wobei der Drehgriff (26) wenigstens teilweise um den Ring (24a, 24b) herum aufgeschoben ist.

13. Hebel nach einem der Ansprüche 1 bis 12, umfassend ein Gehäuse (32, 34), wobei ein Fenster (33) in dem Gehäuse (32, 34) ausgebildet ist, wobei das Antriebselement (28) einen durch das Fenster (33) sichtbaren Cursor (40) aufweist, wobei die Position des Cursors (40) relativ zu dem Fenster (33) eine Geschwindigkeitsanzeigemarke bildet.

14. Hebel nach einem der Ansprüche 1 bis 13, umfassend Mittel zum sequentiellen Positionieren (200), die zwischen dem Drehgriff (26) und dem Antriebselement (28) eingefügt sind, die derart gestaltet sind, dass der Drehgriff (26) in eine neutrale Position (N) zurückkehrt, nachdem er in eine erste Drehrichtung (R1) bewegt worden ist, oder in eine zu der ersten Drehrichtung (R1) entgegengesetzte zweite Drehrichtung (R2), während das Antriebselement (28) in der Position bleibt, in die es mit Hilfe der Bewegung des Drehgriffs (26) bewegt worden ist.

**Claims**

1. A gearshift lever for a bicycle and presenting an opening (22) extending along a main axis (X), said lever (20) being configured to be mounted coaxially on a grip (12a) of a bicycle handlebar, said lever (20) comprising:

   · a stationary element (24) that is configured to be secured to the handlebar grip (12a);
   · a rotary grip (26) that is coaxial about the main axis (X) and that is movable in rotation about the main axis (X) ;
   · a drive element (28) that is movable in rotation about the main axis (X) and that is configured to drive the end (16a) of a cable (16) for controlling a derailleur (14); and
   · coupling means (100) configured to couple together the rotary grip (26) and the drive element (28) in rotation so that the angular stroke of the drive element (28) is less than the angular stroke of the rotary grip (26), the coupling means (100) comprising a first toothed wheel (110) that is coaxial about the main axis (X) and that is coupled in rotation with the rotary grip (26);

   said lever (20) being **characterized in that** the coupling means (100) also comprise a second toothed wheel (130) that is coaxial about the main axis (X) and coupled to rotate with the drive element (28) and an intermediate element (120) presenting an axis of rotation that is parallel to, and distinct from, the main axis (X) and coupling together the first toothed wheel (110) and the second toothed wheel (130) in rotation.

2. A lever according to claim 1, wherein the intermediate element (120) presents a third toothed wheel (122) directly meshing with the first toothed wheel (110), and a fourth toothed wheel (124) that is secured to the third toothed wheel (122), said fourth toothed wheel (124) directly meshing with the second toothed wheel (130).

3. A lever according to claim 2, wherein the radius (RB) of the first toothed wheel (110) is greater than the radius (RC) of the third toothed wheel (122), the radius (RB) of the third toothed wheel (122) is greater than the radius (RD) of the fourth toothed wheel (124), the radius (RD) of the fourth toothed wheel (124) is less than the radius (RE) of the second toothed wheel (130), and the radius (RB) of the first toothed wheel (110) is less than the radius (RE) of the second toothed wheel (130).

4. A lever according to any one of claims 1 to 3, wherein the transmission ratio between the second toothed wheel (130) and the first toothed wheel (110) lies in the range 2 to 4.

5. A lever according to any one of claims 1 to 4, wherein the second toothed wheel (130) presents teeth (132) for coupling with the intermediate element (120) solely over a first angular sector ($\alpha$1), while the drive element (28) is arranged solely over a second angular sector ($\alpha$2) of said second toothed wheel (130) that is distinct from the first angular sector ($\alpha$1).

6. A lever according to any one of claims 1 to 5, wherein the opening (22) is cylindrical and is formed in a cylindrical sleeve (30), the rotary grip (26), the drive element (28), the first toothed wheel (110), and the second toothed wheel (130) being mounted to rotate about said cylindrical sleeve (30).

7. A lever according to claim 6, wherein the second toothed wheel (130) is housed in a casing, said casing comprising two half-casings (32, 34), one of the half-casings (32) being secured to the cylindrical sleeve (30).

8. A lever according to claim 7, wherein the two half-casings respectively form an outer half-casing (32) and an intermediate half-casing (34), the first toothed wheel (110) being placed in a space (36) provided between the rotary grip (26), the intermediate half-casing (34), and the sleeve (30).

9. A lever according to claim 8, wherein the first toothed wheel (110) is housed axially between the rotary grip (26) and the intermediate half-casing (34) and radially between the cylindrical sleeve (30) and the rotary grip (26).

10. A lever according to any one of claims 7 to 9, wherein the two half-casings respectively form an outer half-casing (32) and an intermediate half-casing (34), the outer half-casing (32) presenting a shaft (32a), the intermediate element (120) being mounted to rotate about said shaft (32a), the intermediate half-casing (34) including a wall (34a) extending in a radial direction, and the intermediate element (120) passing through said wall (34a).

11. A lever according to any one of claims 6 to 10, wherein the rotary grip (26) cooperates with the sleeve (30) by clip fastening along the main axis (X).

**12.** A lever according to any one of claims 6 to 11, wherein the stationary element (24) comprises a ring (24a, 24b) that is engaged around the cylindrical sleeve (30), the rotary grip (26) being at least partially engaged around the ring (24a, 24b).

**13.** A lever according to any one of claims 1 to 12, including a casing (32, 34), a window (33) being provided in said casing (32, 34), the drive element (28) presenting a slider (40) that is visible through the window (33), the position of the slider (40) relative to the window (33) forming a gear ratio indicator.

**14.** A lever according to any one of claims 1 to 13, including sequential positioning means (200) that are interposed between the rotary grip (26) and the drive element (28), configured so that the rotary grip (26) returns to a neutral position (N) after being moved in a first direction of rotation (R1), or in a second direction of rotation (R2) opposite the first direction of rotation (R1), while the drive element (28) remains in the position to which it was moved as a result of said movement of the rotary grip (26).

FIG.1

EP 2 631 163 B1

FIG.2

EP 2 631 163 B1

FIG.3A

FIG.3B

FIG.4

EP 2 631 163 B1

FIG.5A

FIG.5B

24

FIG.5C

FIG.6

FIG.7

EP 2 631 163 B1

FIG.8A

FIG.9A

FIG.8B

FIG.9B

FIG.8C

FIG.9C

FIG.8D

FIG.9D

FIG.10A

FIG.11A

FIG.10B

FIG.11B

FIG.10C

FIG.11C

FIG.10D

FIG.11D

**FIG.10E**

**FIG.11E**

**FIG.10F**

**FIG.11F**

EP 2 631 163 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1238899 A